# EUROPÄISCHE PATENTSCHRIFT

(11) **EP 1 002 464 B1**
(45) Veröffentlichungstag und Bekanntmachung des Hinweises auf die Patenterteilung: **02.01.2004**
(21) Anmeldenummer: 99120906.5
(22) Anmeldetag: 29.10.1999
(51) Int. Cl.: A23G 1/00, A23G 1/21, A23G 3/00, A23G 1/20, A23G 7/00

(54) **Verpackter Süsswarenhohlkörper sowie Verfahren zur Herstellung eines verpackten Süsswarenhohlkörpers**
Packaged hollow confectionery product and method of production thereof
Produit de confiserie creux emballé et procédé de fabrication

(30) Priorität: 05.11.1998 DE 19851063
(43) Veröffentlichungstag der Anmeldung: 24.05.2000
(73) Patentinhaber: Ferrero oHG mbH, 60599 Frankfurt (DE); Ferrero S.p.A., 12051 Alba (Cuneo) (IT); SOREMARTEC S.A., 6700 Arlon-Schoppach (BE)
(72) Erfinder: Ferrero, Pietro, Dr., 2633 Senningerberg (LU)
(74) Vertreter: HOFFMANN - EITLE

(56) Entgegenhaltungen:
- EP-A- 0 715 813
- EP-A- 0 730 827
- EP-A- 0 948 899
- WO-A-95/32633
- BR-A- 9 301 046
- DE-A- 2 124 277
- DE-A- 3 342 069
- GB-A- 1 052 153
- US-A- 4 027 047
- US-A- 4 426 402
- PATENT ABSTRACTS OF JAPAN vol. 013, no. 137 (C-582), 5. April 1989 (1989-04-05) & JP 63 301751 A (AKUTAGAWA SEIKA KK), 8. Dezember 1988 (1988-12-08)

## Beschreibung

### Technisches Gebiet

Die vorliegende Erfindung betrifft ein Verfahren zur Herstellung eines verpackten Süßwarenhohlkörpers aus einer temperierten gießfähigen Süßwarenmasse, insbesondere aus einer Schokoladenmasse oder einer schokoladenähnlichen Masse. Ferner betrifft die Erfindung einen verpackten Süßwarenhohlkörper aus einer temperierten gießfähigen Süßwarenmasse, insbesondere aus einer Schokoladenmasse oder einer schokoladenähnlichen Masse.

### Stand der Technik

Bei einem bekannten Verfahren zur Herstellung eines verpackten Süßwarenhohlkörpers aus einer temperierten gießfähigen Süßwarenmasse, wie es die Anmelderin derzeit industriell anwendet, werden üblicherweise zwei miteinander korrespondierende und ggf. erwärmte Formhälften bereitgestellt, die vollständig mit einer erwärmten und in diesem Zustand flüssigen oder pastösen Süßwarenmasse gefüllt werden. Anschließend werden die Formen umgedreht, so daß ein Großteil der eingefüllten Süßwarenmasse abläuft und zur Weiterverwendung aufgefangen wird, während ein kleiner Teil der Süßwarenmasse an der Innenkontur der jeweiligen Formhälfte als dünne und noch relativ weiche Schicht haften bleibt. Durch Rütteln und Abkühlen der Formhälften wird dann aus dieser Schicht eine im wesentlichen gleichmäßige, dünne Süßwarenkörper-Halbschale in der jeweiligen Formhälfte ausgebildet. Bei bestimmten Süßwarenarten wird dann ein nicht eßbarer Überraschungsartikel in zumindest einer der abgekühlten, erstarrten Süßwarenkörper-Halbschalen angeordnet. Die miteinander korrespondierenden Formhälften mit den darin erstarrten Süßwarenkörper-Halbschalen werden anschließend nochmals kurz erwärmt und in passender Ausrichtung aufeinandergelegt und die Süßwarenkörper-Halbschalen dabei an ihren Schalenrändern aufeinandergepreßt, wodurch sie zu einem geschlossenen Süßwarenhohlkörper zusammenschmelzen. Sofern zuvor ein Überraschungsartikel in eine Formhälfte plaziert wurde, so ist der Überraschungsartikel nun im Inneren des Süßwarenhohlkörpers eingeschlossen. Der fertige erkaltete Süßwarenhohlkörper wird aus den Formhälften herausgelöst und dann üblicherweise in eine Einschlagverpackung, zum Beispiel eine bedruckte Aluminiumfolie oder dergleichen, eingepackt. Bei diesem Verfahren ist es erforderlich, eine relativ große Menge der flüssigen oder pastösen Süßwarenmasse umzuwälzen und beim Einfüllen in die Formhälften zu verarbeiten.

Da die Formhälften nach einem abgeschlossenen Herstellungszyklus des Süßwarenhohlkörpers stets wiederverwendet werden, müssen sie von eventuell vorhandenen Süßwarenresten befreit und auch gereinigt und ggf. zwischengelagert werden. Ferner ist es notwendig, die Formenhälften sehr solide zu bauen. Zur Herstellung von großen Stückzahlen eines bestimmten Typs eines Süßwarenhohlkörpers wird daher auch eine entsprechend große Anzahl Formenhälften benötigt, die recht kostenintensiv sind. Zur Umstellung der Fertigung auf einen anderen Süßwarentyp sind neue Formen in ausreichender Anzahl erforderlich, was wiederum mit einem nicht unerheblichen Kostenaufwand verbunden ist. Die Vielzahl der jeweiligen Formenhälften sind darüber hinaus in einem Lager zu halten. Ferner kommt es beim Herauslösen des fertigen Süßwarenhohlkörpers aus den Formhälften, beim Überführen der Süßwarenhohlkörper zu einer Verpackungsstation und beim Verpacken oftmals zu einer Beschädigung des Produktes, so daß stets eine gewisse Ausschussquote vorhanden ist. Da auch der verpackte auslieferungsfertige Süßwarenhohlkörper recht fragil ist, muss infolge von etwaigen beim Transport der Ware zu einem Abnehmer, beim Verladen und Aufstellen der Ware in Verkaufsräumen oder bei der Handhabung der Ware durch einen Endverbraucher auftretenden Beschädigungen mit einem weiteren Ausschussanteil gerechnet werden.

Die GB 1 052 153 offenbart ein Verfahren zur Herstellung eines Süßwarenhohlkörpers aus einer temperierten gießfähigen Süßwarenmasse, z.B. Schokolade. Bei diesem Verfahren wird eine Halbschale in einer dünnwandigen Formhälfte geformt. Die Süßwarenmasse wird auf einen entsprechenden Stempel aufgetragen und dieser in die Formhälfte eingebracht. Durch eine Rotationsbewegung des Stempels wird die Süßwarenmasse in der Formhälfte gleichmäßig verteilt. Nach dem Erstarren der Süßwarenmasse wird der Stempel wieder entfernt und zwei Formhälften, welche zugleich die Außenverpackung darstellen, werden zusammengebracht und bilden den Süßwarenhohlkörper.

Die EP 0 730 827 offenbart ein nach dem Spritzgussverfahren arbeitendes Verfahren zur Herstellung eines Süßwarenhohlkörpers aus einer gießfähigen Süßwarenmasse. Dabei werden korrespondierende Süßwarenhalbschalen in einer einstückigen Form gegossen, welche nach dem Erstarren der Süßwarenmasse entsprechend zusammengeklappt wird, um den Süßwarenhohlkörper zu bilden und als Außenverpackung zu dienen.

Die DE 3 342 069 offenbart einen nach dem Schleuderverfahren hergestellten einteiligen und in sich geschlossenen Süßwarenhohlkörper, der lösbar in zwei dünnwandige miteinander korrespondierende Formhälften, in denen auch das Schleudergießverfahren erfolgt, eingeformt ist. Dabei verfügt der Rand der Formhälften über einen teilweise in das Forminnere ragenden Schenkel, der in eine Nut des Süßwarenhohlköpers ragt und die Formhälften an dem Süßwarenhohlkörper befestigt.

Aus der DE 195 35 292 A1 ist ein Verfahren zur Herstellung von Schokoladenschalen bekannt, bei dem eine temperierte schokoladenähnliche fetthaltige Masse in eine Form eingefüllt - und dann ein gekühlter Stempel soweit in die Form und die darin befindliche Masse eingeführt wird, bis ein gewünschter Wandstärken-Abstand zur Form erreicht ist. Bei diesem Vorgang tritt überschüssige Masse aus der Form aus. Vor dem Einführen des Stempels in die Masse wird auf denjenigen Bereichen der Oberfläche des Stempels, die mit der Masse in Berührung treten, eine Trennmittelschicht erzeugt. Dies geschieht entweder dadurch, dass das Trennmittel von dem in der gasförmigen Atmosphäre, die den Stempel umgibt, enthaltenen Trennmittel (Wasserdampf) abgeschieden wird, oder dadurch, dass ein nichtgasförmiges Trennmittel durch Sprühen, Auftupfen, Eintauchen etc. mechanisch auf die besagten Stempeloberflächen aufgetragen wird. Nachdem die Masse zwischen dem Stempel und der Form erstarrt ist, wird der Stempel wieder entfernt. Durch die Verwendung des Trennmittels soll der Ausschuss beim Ablösen der Schokoladenschale vom Stempel reduziert werden. Wie derart hergestellte Schokoladenschalen zu einem vollständigen Schokoladenkörper zusammengesetzt werden oder wie und mit welchen Mitteln der Schokoladenkörper verpackt wird, geht aus dieser Druckschrift nicht hervor.

Die GB-PS 1 427 496 offenbart ein Verfahren zur Herstellung eines zweischichtigen Schokoladenhohlkörpers, bei dem zunächst zwei jeweils einschichtige Schokoladenhälften, die in dem anzufertigenden Schokoladenhohlkörper eine erste bzw. äußere Schicht darstellen, in zwei getrennten, über ein Gelenk miteinander verbundene korrespondierende Formhälften vorgeformt und anschließend an ihren Innenseiten jeweils mit einer zweiten, d.h. inneren Schicht aus einem geschmolzenen eßbaren Material überzogen werden. In zumindest einer der beiden Formhälften wird die zweite Schicht aus dem geschmolzenen eßbaren Material in einem solch warmen und flüssigen Zustand gehalten, daß, wenn diese Formhälfte über das Gelenk auf die zweite Formhälfte geklappt wird, der Schokoladenhohlkörper an dem Rand seiner inneren/zweiten Schicht verschmolzen und damit zu einem geschlossenen Hohlkörper verbunden wird. Bei dieser Art der Schokoladenhohlkörperherstellung besteht also keine Verbindung an der äusseren/ersten Schalenschicht, was verhindert, daß sich der Stoß der äusseren Schalenschichten in einem unerwünschten Maße aufschmilzt, verformt oder in seiner Farbe verändert. Diese Druckschrift läßt das exakte Verfahren zur Herstellung der jeweiligen ersten Schalensichten völlig offen. Es wird lediglich angemerkt, daß die ersten Schalenschichten durch "bekannte Mittel vorgeformt" werden. Die zweiten Schichten werden in die ersten Schichten gegossen.

Die DE-OS 21 24 277 offenbart ein Verfahren zur Herstellung eines einschichtigen Schokoladenhohlkörpers mittels eines Schleuder-Gieß-Verfahrens. Bei diesem Verfahren wird die Schokolade zunächst in eine aus einer Folie hergestellte Formhälfte eingefüllt, danach die Formhälfte mittels einer korrespondierenden zweiten Formhälfte verschlossen und dann wird die aus diesen beiden Formhälften gebildete Schleuder-Gieß-Form geschleudert, wobei sich die Schokolade verteilt und einen vollständig geschlossenen Schokoladenhohlkörper an den Innenwänden der Schleuder-Gieß-Form ausbildet. Die Schleuder-Gieß-Form, d.h. die aus der Folie gefertigten Formhälften, werden gleichzeitig als Verpackung für den fertigen Schokoladenhohlkörper verwendet. Der Schokoladenhohlkörper kann mit einer Füllung versehen werden.

Zu diesem Zweck wird der Schokoladenkörper entweder nachträglich aufgebohrt oder es wird ein eindrückbarer Abschnitt in der Verpackung vorgesehen, so daß durch Eindrücken dieses Abschnitts ein Loch in den Schokoladenkörper gestanzt wird; durch das gebohrte oder gestanzte Loch hindurch erfolgt dann das Einfüllen der Füllung. Bei einer Füllung handelt es sich um keine zweite Schokoladenhohlkörper-Schicht, sondern um eine den Hohlraum des Schokoladenhohlkörper im wesentlichen vollständig ausfüllende Masse. Diese Druckschrift offenbart ferner eine Verfahrensvariante, bei der zwischen die beiden Formhälften ein Trennblatt eingelegt wird, dessen innerer Rand leicht in den durch die Formhälften gebildeten Hohlraum hineinragt und dessen Querschnitt blendenartig verkleinert. Beim Schleudern bilden sich dadurch zwei nicht aneinander haftende Schokoladenhalbschalen, die durch das Trennblatt voneinander getrennt sind. Nach einem Öffnen der Formhälften wird das Trennblatt entfernt und die Formhälften werden gefüllt und dann wieder geschlossen. Ein solches Schleuder-Gieß-Verfahren ist nicht Gegenstand der vorliegenden Erfindung.

### Darstellung der Erfindung

Der vorliegenden Erfindung liegt das technische Problem zugrunde, ein neuartiges, effektives und wirtschaftliches Verfahren zur Herstellung eines verpackten Süßwarenhohlkörpers zu schaffen, bei dem die durch eine eventuelle Beschädigung des zu fertigenden Produktes während des Herstellungsprozesses üblicherweise entstehende Ausschußquote möglichst weitgehend minimiert ist. Ferner liegt der Erfindung das technische Problem zugrunde, einen geeigneten verpackten Süßwarenhohlkörper zu schaffen, der auf möglichst einfache und effektive Art und Weise mit einem solchen Verfahren herstellbar ist, und der gegen Beschädigungen, die sowohl während seiner Herstellung als auch seiner späteren Handhabung auftreten können, resistenter als bisher bekannte gattungsgemäße verpackte Süßwarenhohlkörper ist.

Das erstgenannte technische Problem wird gelöst durch ein erfindungsgemäßes Verfahren mit den Merkmalen des Patentanspruchs 1.

Dieses Verfahren zur Herstellung eines Süßwarenhohlkörpers aus einer temperierten gießfähigen Süßwarenmasse, insbesondere einer Schokoladenmasse oder einer schokoladenartigen Masse, umfasst folgende Schritte, jedoch nicht zwingenderweise in der gegebenen Reihenfolge:
a) getrenntes Bereitstellen von mindestens zwei miteinander korrespondierenden dünnwandigen Formhälften, die jeweils über einen im wesentlichen gleichartig ausgebildeten oberen flächigen Randabschnitt verfügen, der eine Formhälften-Trennebene definiert, wobei diese Formhälften zugleich eine spätere Außenverpackung des Süßwarenhohlkörpers darstellen,
b) Einfüllen der Süßwarenmasse in die jeweiligen Formhälften,
c) Einführen eines Stempels in die jeweilige Formhälfte und die darin eingefüllte temperierte Süßwarenmasse, um jeweils eine Süßwarenkörper-Halbschale mit einer gewünschten Wandstärke zu formen, und um die jeweilige derart geformte Süßwarenkörper-Halbschale zwischen dem Stempel und der Formhälfte erstarren zu lassen,
d) Entfernen des Stempels,
e) Zusammenfügen der miteinander korrespondierenden dünnwandigen Formhälften mit den darin angeordneten erstarrten Süßwarenkörper-Halbschalen an ihren Formhälften-Trennebenen, so dass die jeweiligen Randabschnitte an den Formhälften-Trennebenen aufeinanderliegen, um einen geschlossenen hohlen Formkörper mit einem darin befindlichen, aus den Süßwarenkörper-Halbschalen zusammengesetzten Süßwarenhohlkörper zu bilden, wobei der hohle Formkörper eine lösbare schalenartige Außenverpackung des Süßwarenhohlkörpers bildet;
f) Beschneiden des fertigen geschlossenen hohlen Formkörpers an den flächigen Randabschnitten seiner an ihren Formhälften-Trennebenen aufeinanderliegenden Formhälften auf ein endgültiges Verpackungsformat für einen einzelnen Süßwarenhohlkörper, so daß ein sich vollständig um den Formkörper herum erstreckender saturnringartiger Rand entsteht.

Der Begriff Süßwarenhohlkörper umfasst insbesondere Schokoladeneier und sogenannte Überraschungseier, wie sie von der Anmelderin vertrieben werden. Die Erfindung ist indes nicht ausschließlich auf diese letztgenannten Produkte und die damit verbundene Formgebung beschränkt. Grundsätzlich kann die Erfindung auch auf jeden anderen geeigneten Süßwarenhohlkörper angewendet werden. Formhälften im Sinne der Erfindung umfassen nicht nur die zwei geometrischen Hälften eines Formkörpers, der dem zu fertigenden Süßwarenhohlkörper seine Form verleiht, sondern auch mehrere Formteile oder Formschalen, die zur Bildung eines vollständigen Formkörpers verwendbar sind. Die Formhälften können darüber hinaus eine gleiche oder unterschiedliche Formgebung besitzen. Analog dazu sind im Sinne der Erfindung unter Süßwarenkörper-Halbschalen nicht nur die zwei geometrischen Halbschalen eines Süßwarenhohlkörpers zu verstehen, sondern auch zwei oder mehrere Süßwarenkörper-Schalenteile im allgemeinen Sinne, die zur Bildung eines vollständigen Süßwarenhohlkörpers verwendbar sind. Die Süßwarenkörper-Halbschalen können sowohl gleiche als auch unterschiedliche Gestalten aufweisen. Das Zusammenfügen der miteinander korrespondierenden dünnwandigen Formhälften setzt nicht zwingenderweise die Herstellung einer festen (aber lösbaren) Verbindung voraus. Im einfachsten Fall kann es ausreichend sein, die Formhälften lediglich lose aufeinander und/oder aneinander zu legen. Einem derartigen Vorgang kann jedoch durchaus ein weiterer Verfahrensschritt folgen, in dem die Formhälften dann in einer gewünschten Art und Weise fest aber lösbar aneinander fixiert werden. Des weiteren ist zu berücksichtigen, dass die Süßwarenkörper-Halbschalen, aus denen der Süßwarenhohlkörper zusammengesetzt wird, nicht zwingenderweise fest miteinander verbunden sein müssen; es ist ebenso möglich, und in bestimmten Fällen auch sinnvoll und beabsichtigt, dass sie nur lose aufeinander und/oder aneinander liegen. Obwohl bei dem erfindungsgemäßen Verfahren die Verwendung eines Trennmittels nicht erforderlich ist, ist es grundsätzlich natürlich möglich, ein solches Mittel an den Formhälften und/oder an dem Stempel vorzusehen.

Bei dem erfindungsgemäßen Verfahren werden die Süßwarenkörper-Halbschalen also in dünnwandigen Formhälften hergestellt, die nicht nur die Gießform oder Urform für die anzufertigenden Süßwarenkörper-Halbschalen bilden, sondern zugleich auch die spätere Außenverpackung dieser Süßwarenkörper-Halbschalen und des daraus zusammengesetzten vollständigen Süßwarenhohlkörpers darstellen. Die Formhälften üben somit eine vorteilhafte Doppelfunktion aus. Ein Loslösen des fertiggestellten Süßwarenhohlkörper aus seinen Formenhälften und ein Überführen des Süßwarenhohlkörpers zu einer separaten Verpackungsstation, an der ein extra Verpackungsschritt ausgeführt wird, ist bei dem erfindungsgemäßen Verfahren also nicht erforderlich, da die Süßwarenkörper-Halbschalen (und damit der gesamte Süßwarenhohlkörper) gewissermaßen bereits in ihrer eigenen Verpackung hergestellt werden. Weil ergo ein werkseitiges Herauslösen des fertigen Süßwarenhohlkörpers aus seinen Formhälften weder erforderlich noch vorgesehen ist, entfällt in diesem Stadium auch das bei konventionellen Verfahren auftretende Risiko einer Beschädigung der Süßwarenkörper-Halbschalen bzw. des Süßwarenhohlkörpers. Die Ausschußquote kann gegenüber konventionellen Verfahren demzufolge erheblich gesenkt werden. Ein weiterer Vorteil ist in diesem Zusammenhang, daß der mit dem erfindungsgemäßen Verfahren hergestellte, an sich recht fragile Süßwarenhohlkörper auch nach dem Herstellungsprozeß sehr resistent gegen äußere Einflüsse und Krafteinwirkungen ist, wie sie beispielsweise beim Transport der Ware zu einem Abnehmer, beim Verladen und Aufstellen der Ware in Verkaufsräumen oder bei der Handhabung der Ware durch einen Endverbraucher auftreten. Dies liegt daran, daß die dünnwandigen Formhälften aufgrund ihrer schalenartigen Konstruktion eine mechanisch sehr solide Hülle bilden und den Süßwarenhohlkörper an seiner Außenseite wirksam schützen. Die in der Praxis durch außerhalb des Fertigungsprozesses auftretende Beschädigungen bedingte Ausschußquote kann folglich weiter gesenkt werden.

Da bei dem erfindungsgemäßen Verfahren die Formhälften aufgrund ihrer Verpackungsfunktion nicht im Rahmen des Herstellungsprozesses wiederverwendet werden, sondern den Herstellungsprozeß verlassen, entfällt sowohl der bei konventionellen Verfahren erforderliche Reinigungsschritt als auch eine Lagerung oder Zwischenlagerung von Formhälften. Die Formhälften, die ja nur aus einem dünnen Material bestehen, können vielmehr unmittelbar vor oder sogar während des laufenden erfindungsgemäßen Herstellungsverfahren angefertigt und zur Verwendung bereitgestellt werden (auf welche Weise dies geschehen kann wird in der nachfolgenden Beschreibung noch genauer erläutert). Zur Anfertigung der Formhälften ist hierbei grundsätzlich nur ein einziges Werkzeug, oder bei komplizierteren Formhälften nur ein einziger Werkzeugsatz, notwendig. Die Produktion der Formenhälften, und damit zugleich der Verpackung, ist damit gegenüber bisher bekannten Lösungen sehr effektiv und vergleichsweise kostengünstig. Zur Umstellung der Fertigung auf einen anderen Süßwarenhohlkörper-Typ ist im wesentlichen nur ein Austausch des Werkzeugs für die Formhälften sowie des Stempels erforderlich. Eine Lagerung der Formhälften des vorhergehenden Süßwarenhohlkörper-Typs kann entfallen, da diese Formhälften ja bereits den Herstellungsprozeß in Form der Verpackung der Süßwarenhohlkörper verlassen haben. Das erfindungsgemäße Verfahren gestattet somit eine sehr flexible Fertigung und ist gegenüber bekannten konventionellen Verfahren sehr effektiv, kostensparend und wirtschaftlich.

Weitere bevorzugte vorteilhafte Ausführungsmerkmale des erfindungsgemäßen Verfahrens sind Gegenstand der Unteransprüche 2 bis 18.

Das der Erfindung zugrundeliegende zweite technische Problem wird gelöst durch eine erfindungsgemäßen verpackten Süßwarenhohlkörper mit den Merkmalen des Patentanspruchs 19.

Dieser verpackte Süßwarenhohlkörper aus einer Süßwarenmasse, insbesondere einer Schokoladenmasse oder einer schokoladenartigen Masse, umfasst mindestens zwei zusammengesetzte, den Süßwarenhohlkörper bildende Süßwarenkörper-Halbschalen, die jeweils lösbar in eine von mindestens zwei dünnwandigen, gleichartigen, miteinander korrespondierenden Formhälften eingeformt sind; die Formhälften verfügen jeweils über einen im wesentlichen gleichartig ausgebildeten oberen flächigen, sich vollständig um den Formkörper herum streckenden saturnartigen Rand bildenden Randabschnitt, der eine Formhälften-Trennebene definiert, an der die Formhälften mit ihren jeweiligen Randabschnitten aufeinanderliegend zu einem geschlossenen hohlen Formkörper zusammengefügt sind, der den aus den Süßwarenkörper-Halbschalen gebildeten Süßwarenhohlkörper vollständig als lösbare schalenartige Außenverpackung umgibt.

Lösbar bedeutet, dass ein Konsument die Außenverpackung also wieder relativ einfach von dem Süßwarenhohlkörper bzw. dessen Süßwarenkörper-Halbschalen entfernen kann, um das Produkt zu verzehren. Hinsichtlich der erfindungsgemäßen Definition der Begriffe "Süßwarenhohlkörper", "Formhälften", "Süßwarenkörper-Halbschalen", "zusammengesetzt" und "zusammengefügt" wird auf die vorangegangenen Ausführungen betreffend das erfindungsgemäße Verfahren verwiesen.

Der erfindungsgemäße verpackte Süßwarenhohlkörper bietet die bereits zuvor im Zusammenhang mit dem erfindungsgemäßen Verfahren genannten Vorteile. Darüber hinaus schafft der erfindungsgemäße verpackte Süßwarenhohlkörper mit seinen außenliegenden Verpackungs-Formhälften für diesen Süßwarentypus eine vollkommen neuartige Verpackungsart, die wiederum neue gestalterische Möglichkeiten eröffnet.

Weitere bevorzugte vorteilhafte Ausgestaltungsmerkmale des erfindungsgemäßen verpackten Süßwarenhohlkörpers sind Gegenstand der Unteransprüche 20 bis 30.

### Kurze Beschreibung der Zeichnungen

Eine bevorzugte Ausführungsform sowie weitere Einzelheiten und Vorteile des erfindungsgemäßen Verfahrens und des erfindungsgemäßen verpackten Süßwarenhohlkörpers sind nachfolgend unter Bezugnahme auf die Zeichnungen beschrieben und erläutert. Es zeigt:
- Fig. 1: eine schematische Querschnittsansicht eines erfindungsgemäßen verpackten Süßwarenhohlkörpers;
- Fig. 2: eine vergrößerte Detailansicht eines Randbereichs des erfindungsgemäßen verpackten Süßwarenhohlkörpers von Fig. 1;
- Fig. 3: einen schematischen Längsschnitt durch einen erfindungsgemäßen verpackten Süßwarenhohlkörper entlang der Linie A-A in Fig. 1;
- Fig. 4: ein schematisches Flußdiagramm des erfindungsgemäßen Verfahrens zur Herstellung eines verpackten Süßwarenhohlkörpers;
- Fig. 5: eine schematische Draufsicht und Querschnittsansicht eines im Rahmen des erfindungsgemäßen Verfahrens verwendeten Formhälftensatz-Paares; und
- Fig. 6: eine schematische Querschnittsansicht einer Formhälfte eines erfindungsgemäßen verpackten Süßwarenhohlkörpers zusammen mit einem Stempel, der im Rahmen des erfindungsgemäßen Verfahrens zur Herstellung von Süßwarenhohlkörper-Halbschalen des Süßwarenhohlkörpers verwendet wird.

### Ausführliche Beschreibung eines Ausführungsbeispiels der Erfindung

In der nachfolgenden Beschreibung und in den Figuren werden zur Vermeidung von Wiederholungen gleiche Komponenten auch mit den gleichen Bezugszeichen gekennzeichnet, sofern keine weitere Differenzierung erforderlich ist.

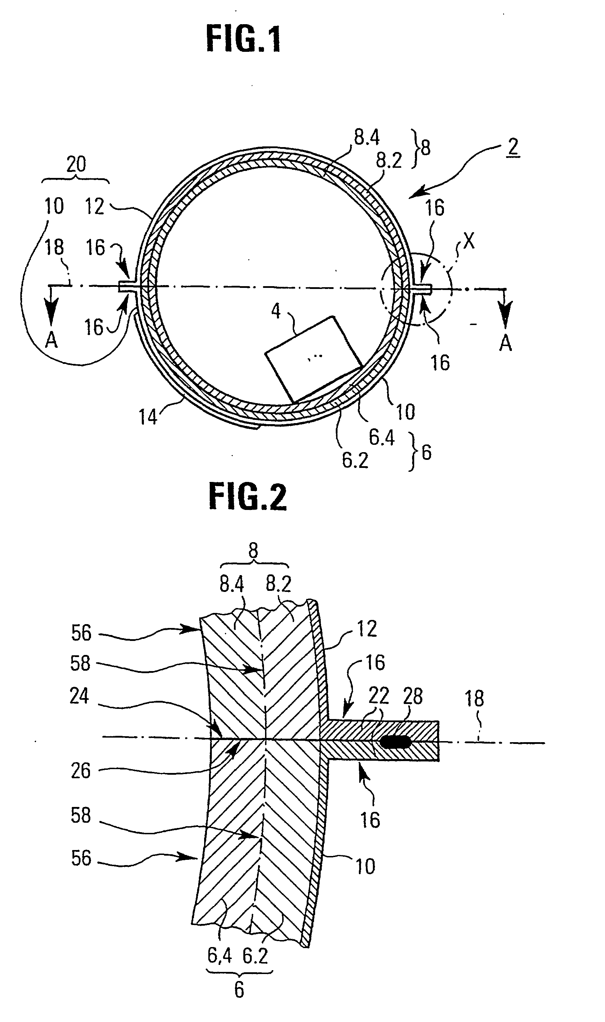

In der Fig. 1 ist eine schematische Querschnittsansicht eines erfindungsgemäßen verpackten Süßwarenhohlkörpers 2 dargestellt. Der Süßwarenhohlkörper 2 selbst ist aus einer Süßwarenmasse, d.h. im vorliegenden Fall einer schokoladenartigen Masse, hergestellt und besitzt eine Eiform. Im Inneren des Süßwarenhohlkörpers 2 ist ein nicht eßbarer Überraschungsartikel 4 angeordnet. Der eiförmige Süßwarenhohlkörper 2 ist aus zwei Süßwarenkörper-Halbschalen 6, 8 zusammengesetzt, die jeweils zweischichtig aufgebaut sind. Die äußere Halbschalenschicht 6.2, 8.2 besteht aus einer dunklen schokoladenartigen Masse und die innere Halbschalenschicht 6.4, 8.4 aus einer hellen schokoladenartigen Masse oder einer Milchcreme. Die Süßwarenkörper-Halbschalen 6, 8 sind jeweils lösbar in eine von zwei zugeordneten dünnwandigen, gleichartigen, miteinander korrespondierenden Formhälften 10, 12 eingeformt, deren Innenkontur jeweils der Außenkontur der zugehörigen Süßwarenkörper-Halbschale 6, 8 entspricht. Die Formhälften 10, 12 sind aus einem tiefgezogenen lebensmittelechten Kunststoffmaterial (hier: Polypropylen) hergestellt und besitzen in diesem Ausführungsbeispiel eine Wandstärke von ca. 0,2 - 0,3 mm. Wie durch das Bezugszeichen 14 angedeutet, sind die Formhälften 10, 12 an ihrer Außenseite zumindest teilweise mit einem Markierungsmittel, d.h. einen Aufdruck, einem Aufkleber, einer Beschriftung oder dergleichen versehen.

Wie sowohl in der Fig. 1 als auch besonders in der Fig. 2 zu erkennen, die eine vergrößerte Detailansicht eines Randbereichs des erfindungsgemäßen verpackten Süßwarenhohlkörpers 2 gemäß der Einzelheit X in Fig. 1 zeigt, verfügen die beiden Formhälften 10, 12 jeweils über einen im wesentlichen gleichartig ausgebildeten oberen flächigen Randabschnitt 16, der eine Formhälften-Trennebene 18 definiert. Über diesen Randabschnitt 16 sind die Formhälften 10, 12 an ihren jeweiligen gemeinsamen Formhälften-Trennebenen 18 aufeinanderliegend zu einem geschlossenen hohlen Formkörper 20 zusammengefügt. Dieser Formkörper 20 umgibt den aus den Süßwarenkörper-Halbschalen 6, 8 gebildeten Süßwarenhohlkörper 2 vollständig als eine lösbare schalenartige Außenverpackung. Wie aus der Zeichnung ersichtlich, bilden die flächigen Randabschnitte 16 der an ihren Formhälften-Trennebenen 18 aufeinanderliegenden Formhälften 10, 12 einen sich vollständig um den Formkörper 20 herum erstreckenden saturnringartigen bzw. flanschartigen Rand 22. Aufgrund der Eiform des Süßwarenhohlkörpers 2 erstreckt sich der saturnringartige Rand 22 außerdem radial zum kreisförmigen kleineren Querschnitt des Süßwarenhohlkörpers 2.

Die Süßwarenkörper-Halbschalen 6, 8 weisen jeweils einen geometrisch präzise geformten Süßwarenkörper-Halbschalenrand 24, 26 auf, der mit einem gleichartigen Süßwarenkörper-Halbschalenrand 24, 26 der jeweils korrespondierenden Süßwarenkörper-Halbschale 6 bzw. 8 genau zusammenpaßt. Im vorliegenden Beispiel liegen die den geschlossenen Süßwarenhohlkörper 2 bildenden zusammengesetzten Süßwarenkörper-Halbschalen 6, 8 an ihren Süßwarenkörper-Halbschalenrändern 24, 26 lediglich lose aufeinander. Um den Überraschungsartikel 4 im Inneren des Süßwarenhohlkörpers 2 zu entnehmen, muß ein Konsument also lediglich die aufeinanderliegenden Süßwarenkörper-Halbschalen 6, 8 durch einen einfachen Handgriff öffnen. In der in den Fig. 1 und 2 gezeigten Konfiguration werden die Süßwarenkörper-Halbschalen 6, 8 durch die zusammengefügten Formhälften 10, 12 in ihrer Position gehalten. Die Süßwarenkörper-Halbschalen 6, 8 könnten im Sinne der Erfindung natürlich auch an ihren Süßwarenkörper-Halbschalenrändern 24, 26 fest zu einem geschlossenen Süßwarenhohlkörper 2 verbunden sein, beispielsweise durch Verschmelzen der Halbschalenränder 24, 26.

Wie in der Fig. 2 des weiteren durch das Bezugszeichen 28 und eine gestrichelte Linie angedeutet, sind die zusammengefügten, aufeinanderliegenden Formhälften 10, 12 im Bereich ihrer Randabschnitte 16 bzw. ihrer saturnringartigen Ränder 22 leicht verschweißt. Die Verschweißung 28 liegt in der Formhälften-Trennebene 18 und verläuft durchgehend um den saturnringartigen Rand 22 und den Formkörper 20 herum. Die Formhälften 10, 12 sind auf diese Weise nicht nur exakt zueinander ausgerichtet aneinander fixiert, sondern zugleich auch an ihren Randabschnitten 16 bzw. 22 in der Formhälften-Trennebene 18 versiegelt. Die durch die Verschweißung 28 hergestellte Versiegelung schützt den in dem Formkörper 20 befindlichen Süßwarenhohlkörper 2 vor äußeren Umwelteinflüssen und ermöglicht somit auch eine konservierende Verpackung.

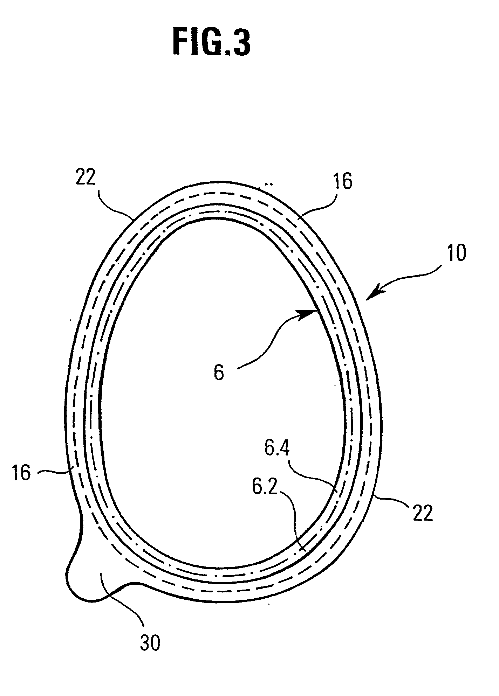

Weitere Einzelheiten des erfindungsgemäßen verpackten Süßwarenhohlkörpers 2 und seiner zugleich als Außenverpackung fungierenden Formhälften 10, 12 sind der Fig. 3 zu entnehmen, die einen schematischen Längsschnitts des verpackten Süßwarenhohlkörpers 2 entlang der Linie A-A in Fig. 1 zeigt. Die durch die Linie A-A angedeutete Schnittebene entspricht hierbei der Lage der zusammenfallenden Trennebenen 18 der beiden Formhälften 10, 12. Wie in der Zeichnung erkennbar, besitzt der saturnringartige Rand 22 einer jeweiligen Formhälfte 10, 12 einen nach außen hervorstehenden zungenartigen Randabschnittsbereich 30, der eine Trennlasche 30 darstellt. Die Formhälften 10, 12, die an ihren Randabschnitten 16 ansonsten umlaufend und dicht miteinander verschweißt (siehe Bezugszeichen 28) sind, liegen im Bereich dieser Trennlasche 30 nur lose aufeinander. Ein Konsument kann deshalb die Trennlasche 30 an diesem Randabschnittsbereich ergreifen und durch Auseinanderziehen derselben 30 die Verschweißung 28 bzw. Versiegelung 28 der zusammengefügten Formhälften 10, 12 aufreißen und die Formhälften 10, 12 somit wieder voneinander lösen. Auf diese Weise wird die durch die Formhälften 10, 12 gebildete schalenartige Außenverpackung 20 geöffnet, und der Süßwarenhohlkörper 2 kann entnommen werden.

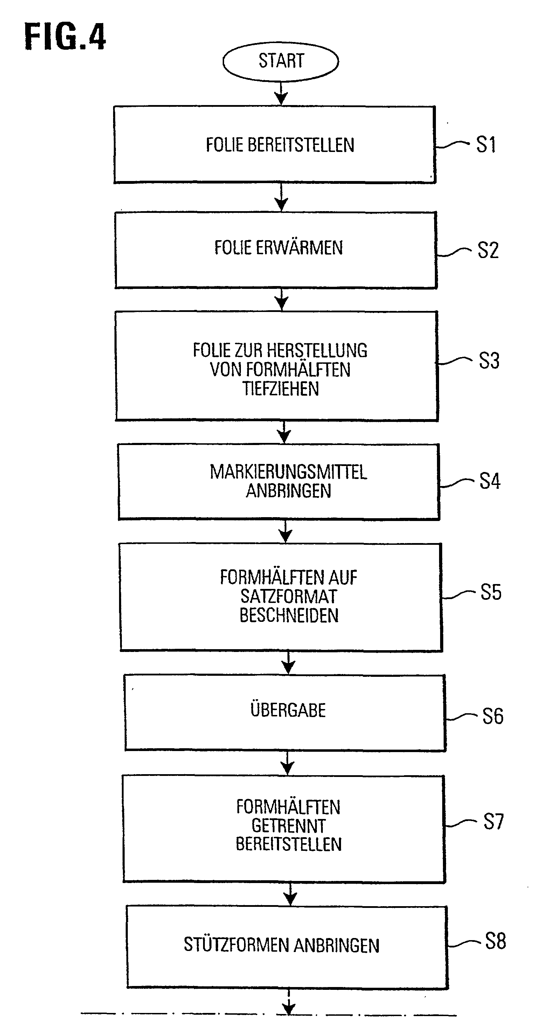

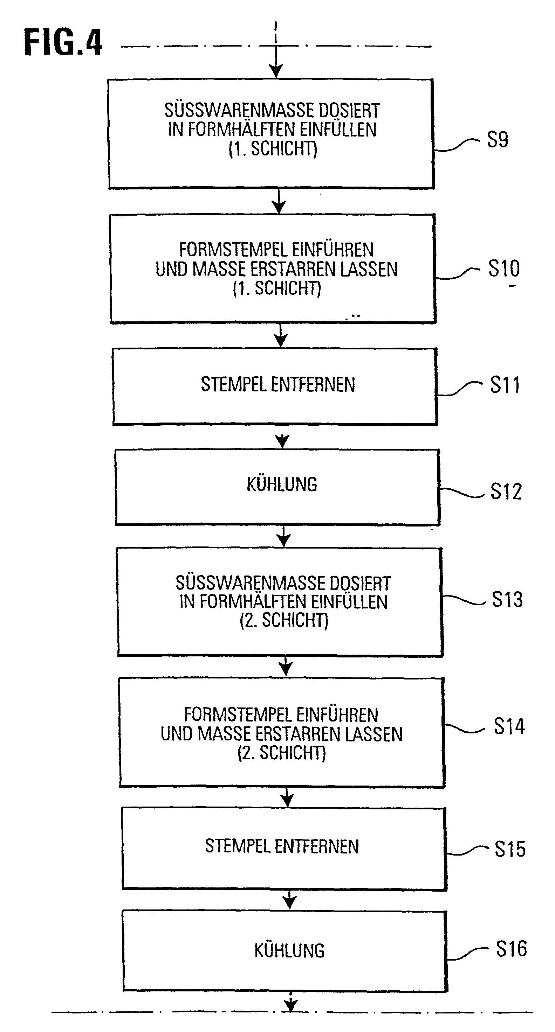

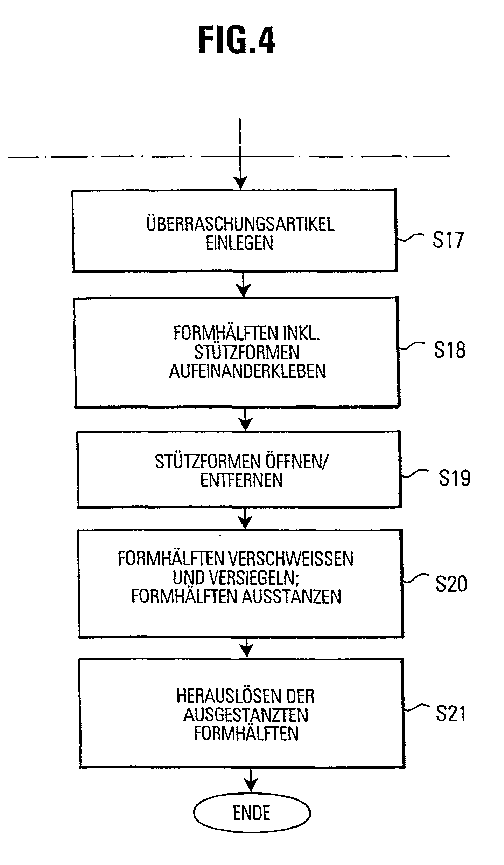

Es wird nun unter Bezugnahme auf Fig. 4 - 6 das erfindungsgemäße Verfahren zur Herstellung eines verpackten Süßwarenhohlkörpers erläutert werden. Für die nachfolgende Beschreibung wird angenommen, daß mit diesem Verfahren der in den Fig. 1 - 3 gezeigte verpackte Süßwarenhohlkörper 2 produziert wird.

Fig. 4 zeigt ein schematisches Flußdiagramm des erfindungsgemäßen Verfahrens zur Herstellung eines Süßwarenhohlkörpers 2 aus einer temperierten gießfähigen Süßwarenmasse, insbesondere einer Schokoladenmasse. Im vorliegenden Ausführungsbeispiel wird das Verfahren im Durchlauf ausgeführt. Das heißt, ein oder mehrere der zur Herstellung des vollständigen verpackten Süßwarenhohlkörpers 2 verwendeten Hilfsmittel und/oder Ausgangsprodukte und/oder Zwischenprodukte durchlaufen eine oder mehrere Verarbeitungsstationen einer Fertigungstrasse.

Im Schritt S1 wird ein dünnes, lebensmittelechtes Kunststoffmaterial (hier Polypropylen) in Folienform auf einer Rolle bereitgestellt. Die Foliendicke des verwendeten Kunststoffmaterials beträgt ca. 0,2 - 0,3 mm. Die Kunststoff-Folie wird dann abgewickelt, in einer ebenen flächigen Anordnung einer Folien-Erwärmungseinrichtung zugeführt und dort erwärmt (Schritt S2).

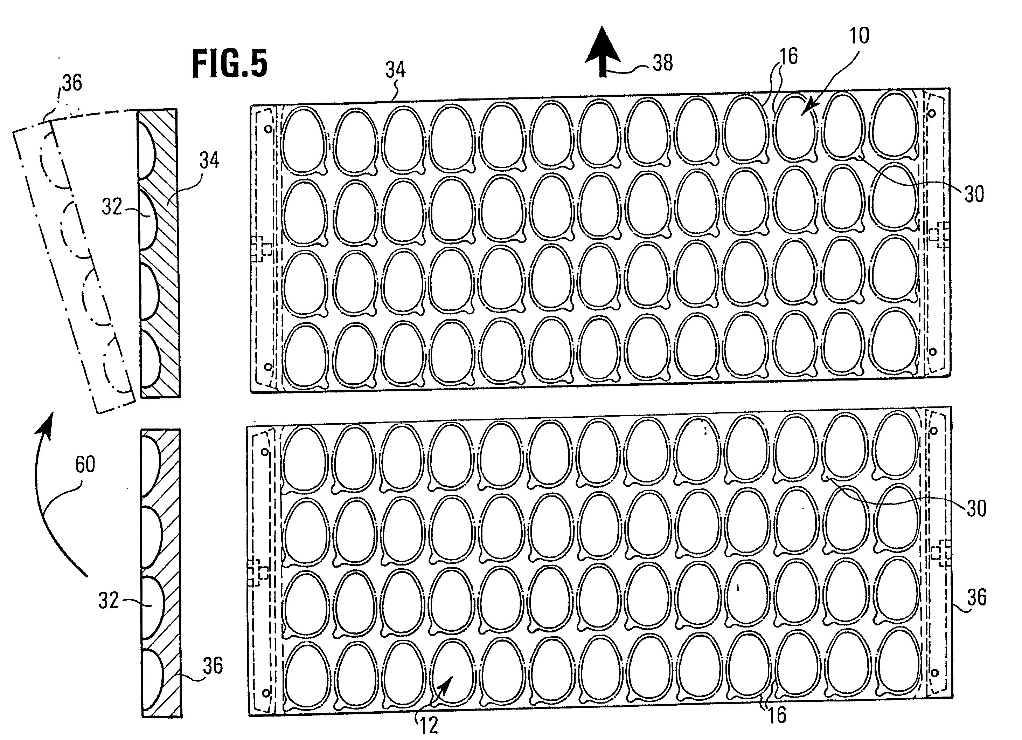

Im Schritt S3 wird die erwärmte Kunststoff-Folie dann in einer Tiefzieheinrichtung tiefgezogen, wobei aus der Folienebene heraus eine Vielzahl von gleichartigen, nebeneinander und hintereinanderliegenden halbschalenförmigen Vertiefungen 32 geformt wird, die über die Folie hinweg einen zusammenhängenden Formhälftensatz 34, 36 bilden (vergl. Fig. 5). Eine jeweilige Vertiefung 32 stellt dabei einen wesentlichen Teil einer für die nachfolgende Herstellung des eigentlichen Süßwarenhohlkörpers 2 verwendeten Formhälfte 10, 12 dar. Mit Hilfe der Tiefzieheinrichtung werden jeweils obere 36 und untere Formhälftensätze 34 gefertigt. Die Vertiefungen 32 und deren umgebende Randabschnitte 16 eines oberen Formhälftensatzes 36 bilden dabei jeweils eine Formhälfte 12 für eine obere Süßwarenkörper-Halbschale 8. Entsprechend bilden die Vertiefungen 32 und deren umgebende Randabschnitte 16 eines unteren Formhälftensatzes 34 jeweils eine Formhälfte 10 für eine untere Süßwarenkörper-Halbschale 6. Das Tiefziehen dieser oberen und unteren Formhälftensätze 34, 36 kann grundsätzlich sowohl parallel als auch sequentiell erfolgen.

Anschließend werden die tiefgezogenen Formhälftensätze 34, 36 im Schritt S4 an ihrer Außenseite, d.h. derjenigen Seite, die später dem fertigen Süßwarenhohlkörper 2 abgewandt sein wird, mit einem Markierungsmittel 14 (vergl. Fig. 1) versehen. Bei diesem Markierungsmittel 14 kann es sich beispielsweise um einen Aufdruck und/oder eine Beschriftung und/oder ein Klebe-Etikett oder dergleichen handeln.

Dann werden die tiefgezogenen und mit dem Markierungsmittel 14 versehen Formhälftensätze 34, 36 im Schritt S5 an ihren Rändern auf ein für die weitere Bearbeitung geeignetes passendes Satzformat beschnitten. Die derart vorbereiteten oberen und unteren Formhälftensätze 34, 36 stellen ein miteinander korrespondierendes Formhälftensatz-Paar 34, 36 dar, dessen Vertiefungen 32 und zusammenhängenden Randabschnitte 16 eine Vielzahl von jeweils paarweise miteinander korrespondierenden dünnwandigen Formhälften 10, 12 bilden. In der Fig. 5 ist in einer schematischen Draufsicht und Querschnittsansicht ein solches Formhälftensatz-Paar 34, 36 dargestellt.

Die oberen und unteren Formhälftensätze 34, 36 werden im Schritt S6 an einer Übergabestation einem folgenden Abschnitt der Fertigungstrasse übergeben.

Dort werden jeweils zwei korrespondierende Formhälftensätze 34, 36, die zusammen das besagte Formhälftensatz-Paar 34, 36 bilden, getrennt voneinander zur Weiterbearbeitung bereitgestellt (Schritt S7). Da die sich nun anschließenden Verfahrensschritte für die jeweiligen Formhälftensatz-Paare 34, 36 stets gleich sind, wird für die nachfolgenden Erläuterungen der Einfachheit halber nur auf ein einzelnes Formhälftensatz-Paar 34, 36 Bezug genommen werden. Die getrennte Bereitstellung erfolgt im vorliegenden Fall dadurch, daß der untere und der obere Formhälftensatz 34, 36, wie in Fig. 5 gezeigt, mit einem geringen Abstand zueinander in ausgerichteter Anordnung hintereinander positioniert und in der durch den Pfeil 38 angedeuteten Durchlaufrichtung weiteren Bearbeitungsstationen zugeführt werden. In der Fig. 5 ist des weiteren erkennbar, daß die aus den Vertiefungen 32 in den beiden Formhälftensätzen 34, 36 gebildeten miteinander korrespondierenden dünnwandigen Formhälften 10, 12 über einen im wesentlichen gleichartig ausgebildeten oberen flächigen Randabschnitt 16 verfügen, der eine Formhälften-Trennebene 18 definiert. Dieser Randabschnitt 16 entspricht in diesem Beispiel der ursprünglichen Folienebene, aus der heraus die Formhälften 10, 12 bzw. ihre Vertiefungen 32 beim vorangegangenen Tiefziehen geformt wurden. Wie bereits weiter oben im Zusammenhang mit dem erfindungsgemäßen verpackten Süßwarenhohlkörper 2 erwähnt, stellen diese Formhälften 10, 12 zugleich eine spätere Außenverpackung des noch herzustellenden Süßwarenhohlkörpers 2 dar.

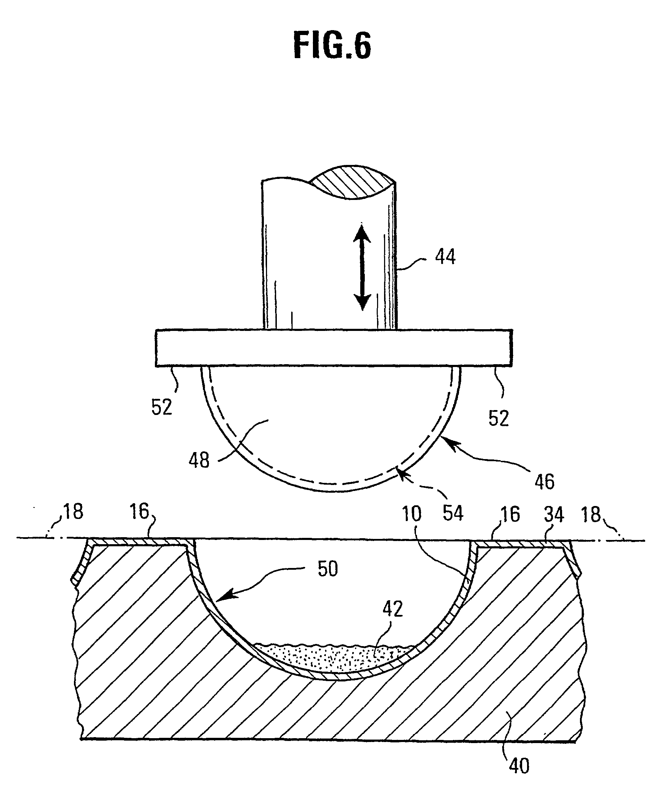

Im Rahmen ihrer Bereitstellung werden die Formhälftensätze im Schritt S8 auf Stützformen 40 (siehe Fig. 6) angeordnet, die zu den beiden Formhälftensätzen 34, 36 und ihren darin ausgebildeten Formhälften 10, 12 jeweils komplementär ausgebildet sind und somit die einzelnen Formhälften 10, 12 an ihren Außenseiten stützen. Diese Stützformen 40 werden für die nachfolgende Verfahrensschritte mit den Formhälftensätzen 34, 36 bzw. deren Formhälften 10, 12 mitbewegt.

Im anschließenden Schritt S9 werden die Formhälftensätze 34, 36 einer Einfülleinrichtung zugeführt und die Formhälften 10, 12 dort mit einer vorbestimmten Volumenmenge der temperierten gießfähigen Süßwarenmasse 42 befüllt. Es wird hierbei eine dunkle Süßwarenmasse verwendet.

Da die nun folgenden Vorgänge für jede Formhälfte 10, 12 und jede Süßwarenkörper-Halbschale 6, 8 gleich sind, wird nachfolgend nur auf eine Formhälfte 10 und eine Süßwarenkörper-Halbschale 6 aus der Vielzahl von Formhälften 10, 12 und Süßwarenkörper-Halbschalen 6, 8 Bezug genommen werden. Für die anderen Formhälften 10, 12 und Süßwarenkörper-Halbschalen 6, 8 erfolgt der Ablauf analog.

Wie in der schematischen Querschnittsansicht von Fig. 6 skizziert, wird im Schritt S10 ein beweglicher gekühlter Stempel 44 bzw. Formstempel in die Formhälfte 10 und die darin eingefüllte temperierte Süßwarenmasse 42 eingeführt, um eine Süßwarenkörper-Halbschale 6 mit einer gewünschten Wandstärke zu formen und um die derart geformte Süßwarenkörper-Halbschale 6 zwischen dem Stempel 44 und der Formhälfte 10 erstarren zu lassen. Die Außenkontur 46 des in der Form einer Eihälfte geformten Hauptabschnitts 48 des in die Süßwarenmasse 42 und die Formhälfte 10 eintauchenden Stempels 44 entspricht dabei der Innenkontur 58 der mit dem Stempel 44 zu formenden ersten Schalenschicht 6.2 der Süßwarenkörper-Halbschale 6 (vergl. Fig. 2). Beim Eintauchen des Stempels 44 in die Süßwarenmasse 42 wird diese auf eine im vorliegenden Ausführungsbeispiel relativ dünne Süßwarenmassenschicht verdrängt, deren Schichtdicke bzw. Wandstärke dem Abstand zwischen der Formhälfteninnenkontur 50 und der Außenkontur 46 des Stempels 44 entspricht.

Aus der Fig. 6 ist des weiteren ersichtlich, daß der Stempel 44 in seinem sich an den Hauptabschnitt 48 anschließenden oberen Stempelabschnitt eine kragenartige, abgestufte Stempelformfläche 52 aufweist. Bei Erreichen der zur Bildung der gewünschten Wandstärke der im Schritt S10 zu formenden Süßwarenkörper-Halbschale 6 erforderlichen Stempelposition verschließt diese Stempelformfläche 52 die Formhälfte 10 an ihrer Trennebene 18 im wesentlichen bündig, wobei die Stempelformfläche 52 auf dem Randabschnitt 16 der Formhälfte 10 aufliegt. Auf diese Weise definiert die Stempelformfläche 52 einen geometrisch präzisen Süßwarenkörper-Halbschalenrand 24 (vergl. Fig. 2), wenn sich die von dem Stempel 44 verdrängte Süßwarenmasse 42 an die Stempelformfläche 52 anlegt und dann erstarrt.

Es ist leicht nachzuvollziehen, daß bei der Verwendung eines derartigen Stempels 44 die in die Formhälfte 10 eingefüllte Volumenmenge, wie bereits zuvor kurz angedeutet, genau dosiert sein sollte. Im zuvor genannten Schritt S9 wird deshalb eine Süßwarenmasse-Volumenmenge in die Formhälfte 10 eingefüllt, deren Volumen im wesentlichen dem Volumen eines Hohlraumes entspricht, der zwischen der Innenkontur 50 der Formhälfte 10, der Außenkontur des in die Formhälfte 10 eingeführten Stempels 44 und der die Trennebene 18 bündig verschließenden Stempelformfläche 52 abgegrenzt ist. Das bedeutet, daß die eingefüllte Süßwarenmasse 42 durch den bis zu einer Endposition in die Formhälfte 10 eingeführten Stempel 44 genau soweit verdrängt wird, daß sie den zwischen dem Stempel 44 und der Formhälfte 10 zur Verfügung stehenden Raum vollständig ausfüllt. Die Stützformen werden durch einen, in den Zeichnungen nicht dargestellten Unterstempel gestützt. In der Praxis kann die Volumenmenge prinzipiell auch geringfügig größer sein, da bis zum Anliegen der Stempelformfläche 52 an dem Randabschnitt 16 bzw. der Trennebene 18 noch überschüssige Masse austreten kann. Die exakte Dosierung ist allerdings bevorzugt. Bei der Bestimmung der Süßwarenmasse-Volumenmenge ist in der Regel eine beim Erkalten eventuell auftretende Materialschrumpfung der Süßwarenmasse zu berücksichtigen. Auf diese Weise wird in den Schritten S9 und S10 eine Süßwarenkörper-Halbschale 6 mit einem exakt begrenzten Süßwarenkörper-Halbschalenrand 24 (vergl. Fig. 2) geformt, der mit einem gleichartigen Süßwarenkörper-Halbschalenrand 26 einer korrespondierenden Süßwarenkörper-Halbschale 12, bei der analog vorgegangen wird, genau zusammenpaßt.

Im Schritt S11 wird der Stempel 44 wieder aus der Formhälfte 10, 12 und der darin erstarrten Süßwarenmasse 42 entfernt. In der Formhälfte 10, 12 befindet sich nun eine erste einschichtige (vergl. Bezugszeichen 6.2 in Fig. 1 und 2) Süßwarenkörper-Halbschale 6 mit einer dünnen Wandstärke.

Danach wird die in ihrer Formhälfte 10 befindliche Süßwarenkörper-Halbschale 6 zu einer Kühleinrichtung transportiert und dort in einem Schritt S12 über einen bestimmten Zeitraum im Durchlauf weiter gekühlt, um einen bestimmten Kristallisationsgrad der Süßwarenmasse zu erzielen.

Da im Rahmen des vorliegenden Ausführungsbeispiels ein Süßwarenhohlkörper 2 hergestellt werden soll, der Süßwarenkörper-Halbschalen 6, 8 mit einem zweischichtigen Aufbau (vergl. Fig. 1 und 2) besitzt, werden die in den Schritten S9 - S12 geschilderten Vorgänge nochmals nahezu analog wiederholt, um eine zweite Schalenschicht 6.4 einer Süßwarenmasse 42 in der bereits zuvor erstarrten Süßwarenkörper-Halbschalenschicht 6.2, die in den Schritten S9 - S12 geformt wurde, zu bilden. Dies geschieht in den Schritten S13 - S16, die zwar im wesentlichen den Schritten S9 - S12 entsprechen, sich aber an den Schritt S12 anschließen und in einem eigens dafür vorgesehenen Abschnitt der Fertigungstrasse durchgeführt werden.

Die wesentlichen Unterschiede zwischen den Schritten S13 - S16 und den vorangegangenen Schritten S9 - S12 bestehen darin, daß im vorliegenden Fall für die zweite Schalenschicht 6.4 eine helle Süßwarenmasse 42 verwendet wird, daß der Stempel 44 eine gegenüber dem für die erste Schalenschicht 6.2 eingesetzten Stempel geringfügig andere Geometrie und Abmessung besitzt (in der Fig. 6 durch eine gestrichelte Linie 54 am Stempel 44 angedeutet), und daß die genau dosierte Volumenmenge der in die Formhälfte 10 und die darin befindliche erste Schalenschicht 6.2 einzufüllenden Süßwarenmasse 42 auf diesen anderen Stempel 44 abgestimmt ist. Die angepaßte Außenkontur 54 des im Schritt S14 verwendeten Stempels 44 entspricht also der Innenkontur 56 der zweiten, inneren Schicht 6.4 der zweischichtig auszubildenden Süßwarenkörper-Halbschale 6. Ferner ist die Volumenmenge der im Schritt S13 in die Formhälfte 10 und die darin befindliche erste Schalenschicht 6.2 bzw. Süßwarenkörper-Halbschale 6 eingefüllten Süßwarenmasse 42 nun so dosiert, daß ihr Volumen im wesentlichen dem Volumen eines Hohlraumes entspricht, der zwischen der Innenkontur 58 der ersten Schalenschicht 6.2 bzw. Süßwarenkörper-Halbschale 6, der Außenkontur 54 des in die Formhälfte 10 eingeführten Stempels 44 und der Stempelformfläche 52, welche die Trennebene 18 am Randabschnitt 16 bündig verschließt, abgegrenzt ist.

Nachdem die beiden zweischichtigen Süßwarenkörper-Halbschalen 6, 8 des Süßwarenhohlkörpers 2 auf die zuvor beschriebene Art und Weise fertiggestellt wurden, wird im Schritt S17 mit Hilfe einer Einlegeeinrichtung ein Überraschungsartikel 4 (vergl. Fig. 1), beispielsweise ein kleines Spielzeug oder dergleichen, in eine der beiden Süßwarenkörper-Halbschalen 6, 8 gegeben. Die Süßwarenkörper-Halbschalen 6, 8 sind selbstverständlich bereits erstarrt und entsprechend formfest. In vorliegenden Fall erfolgt das Einlegen des Überraschungsartikels 4 in die Formhälften 10 des in Durchlaufrichtung vorauseilenden Formhälftensatzes 34 (vergl. Fig. 5 ) .

Im den nun folgenden Schritten S18 - S20 werden die miteinander korrespondierenden dünnwandigen Formhälften 10, 12 mit den darin angeordneten erstarrten Süßwarenkörper-Halbschalen 6,8 an ihren Formhälften-Trennebenen 18 bzw. Randabschnitten 16 zusammengefügt, so daß die jeweiligen Formhälften-Trennebenen 18 aufeinanderliegen, um einen geschlossenen hohlen Formkörper 20 mit einem darin befindlichen, aus den Süßwarenkörper-Halbschalen 6, 8 zusammengesetzten Süßwarenhohlkörper 2 zu bilden, wobei der hohle Formkörper 20 eine lösbare schalenartige Außenverpackung des Süßwarenhohlkörpers 2 bildet.

Dies geschieht zunächst dadurch, daß im Schritt S18 die beiden Formhälftensätze 34, 36 zusammen mit den zugeordneten Stützformen 40 mittels einer Schließeinrichtung in zusammenpassender Ausrichtung aufeinandergeklappt (wie in Fig. 5 durch den Pfeil 60 angedeutet) und leicht aneinandergedrückt werden. Die miteinander korrespondierenden jeweiligen Formhälften 10, 12 kommen dabei in entsprechend passender Ausrichtung an ihren Randabschnitten 16 (die pro Formhälftensatz noch zusammenhängen) bzw. ihren Formhälften-Trennebenen 18 aufeinander zu liegen. Sie bilden dabei jeweils paarweise einen vollständigen hohlen Formkörper 20, in dessen Inneren sich zwei zusammengehörende Süßwarenkörper-Halbschalen 6, 8 befinden. Dieser hohlen Formkörper 20 stellt bereits in diesem Zustand eine schalenartige Außenverpackung des Süßwarenhohlkörpers 2 dar.

Im vorliegenden Beispiel liegen die von dem hohlen Formkörper 20 eingeschlossenen Süßwarenkörper-Halbschalen 6, 8 nur lose an ihren geometrisch präzise geformten Schalenrändern 24, 26 aufeinander. Es natürlich ebenso möglich, und im Rahmen der Erfindung auch vorgesehen, zumindest eine der Süßwarenkörper-Halbschalen 6, 8 an ihrem Süßwarenkörper-Halbschalenrand 24, 26, der mit einem Süßwarenkörper-Halbschalenrand 24, 26 der jeweils anderen korrespondierenden Süßwarenkörper-Halbschale 6, 8 zusammenpaßt, zu erwärmen, so daß sich die Süßwarenkörper-Halbschalen 6, 8 beim Zusammenfügen bzw. Aufeinanderlegen der dünnwandigen Formhälften 10, 12 an ihren Süßwarenkörper-Halbschalenrändern 24, 26 zu einem vollständig geschlossenen Süßwarenhohlkörper 2 verbinden.

Im Schritt S19 werden die bis zu diesem Zeitpunkt mitgeführten Stützformen 40 durch eine Stützformen-Öffnungseinrichtung wieder geöffnet und von den aufeinanderliegenden Formhälftensätzen 34, 36 entfernt.

Danach werden die bis dahin noch relativ lose durch die aufeinanderliegenden Formhälftensätze 34, 36 zusammengefügten Formhälften 10, 12 im Schritt S20 an ihren Randabschnitten 16 miteinander verschweißt 28. Die Verschweißung 28 erfolgt dabei in der Formhälften-Trennebene 18 durchgehend um den Formkörper 20 bzw. den saturnringartigen Rand 22 herum, so daß die jeweils miteinander korrespondierenden Formhälften 10, 12 nicht nur exakt zueinander ausgerichtet aneinander fixiert, sondern zugleich auch an ihren Formhälften-Trennebenen 18 versiegelt werden (vergl. hierzu auch Fig. 2 und 3). Der aus jeweils zwei Formhälften 10, 12 zusammengesetzte hohle Formkörper 20 ist damit vollständig verschlossen.

Im wesentlichen gleichzeitig mit dem Verschweißen 28 werden im Schritt S20 die jeweiligen Formkörper 20, die ja noch über ihre Formhälftensätze 34, 36 zusammenhängen, als Einzelobjekt aus dem Satzformat herausgetrennt und auf ein endgültiges Verpackungsformat beschnitten. Dies geschieht mit Hilfe einer Stanzeinrichtung. Der Trennschnitt erfolgt hierbei an den flächigen Randabschnitten 16 der mit ihren Formhälften-Trennebenen 18 aufeinanderliegenden Formhälften 10, 12. Die Schnittform und Schnittgeometrie ist so gewählt, daß bei diesem Vorgang ein vollständig um den Formkörper 20 herum verlaufender, saturnringartiger Rand 22 entsteht, der einen zungenartigen Randabschnittsbereich 30 besitzt, der eine Trennlasche 30 bildet. Die Kontur und Lage dieses saturnringartigen Randes 22 ist besonders gut in den Fig. 3 und 5 zu erkennen. Da beim Zusammenschweißen 28 der Formhälften 10, 12 die Randabschnittsbereiche, in denen die Trennlasche 30 liegt, ausgespart werden (vergl. insb. Fig. 3) liegen die Rändern bzw. Formhälften-Trennebenen 18 an dieser Stelle nur lose aufeinander.

Die fertig verschweißten und ausgestanzten einzelnen hohlen Formkörper 20, die den innenliegenden Süßwarenhohlkörper 2 schützend umgeben, werden im Schritt S21 aus den verbleibenden Resten der Formhälftensätze 34, 36 herausgelöst und für eine Zwischenlagerung oder einen Transport zum Endabnehmer bereitgestellt. Die Reste der beschnittenen Formhälftensätze 34, 36 können im Rahmen einer Aufbereitungsanlage wieder recycelt werden.

Die Erfindung ist nicht auf die obigen Ausführungsbeispiele, die lediglich der allgemeinen Erläuterung des Grundgedankens der Erfindung dienen, beschränkt. Im Rahmen des Schutzumfangs können das erfindungsgemäße Verfahren und der erfindungsgemäße verpackte Süßwarenhohlkörper vielmehr auch andere als die oben beschriebenen Ausführungs- und Ausgestaltungsformen annehmen. Das Verfahren sowie der verpackte Süßwarenhohlkörper können hierbei insbesondere Merkmale aufweisen, die eine Kombination aus den Einzelmerkmalen der jeweils zugehörigen Ansprüche darstellen. Ferner kann der Süßwarenhohlkörper eine andere als die oben beschriebene Eiform aufweisen. Entsprechend kann auch die Gestalt der dünnwandigen Formhälften abgeändert werden. Für einen Süßwarenhohlkörper können bei Bedarf auch mehr als zwei Formhälften verwendet werden. Sofern Süßwarenkörper-Halbschalen mit einem mehrschichtigen Aufbau hergestellt werden, so können die Süßwarenmassen, welche die Schichten bilden, insbesodnere hinsichtlich der Art der verwendeten Süßwarenmasse und der gewählten Abmessungen sowohl gleich als auch unterschiedlich sein. Neben den im obigen Ausführungsbeispiel erläuterten Verfahrensschritten können auch noch zusätzliche bzw. ergänzenden Schritte, beispielsweise Zwischenkontrollschritte und dergleichen, ausgeführt werden. Zudem ist es denkbar, einen oder mehrere der oben beschriebenen Verfahrensschritte wegzulassen.

Bezugszeichen in den Ansprüchen, der Beschreibung, der Zusammenfassung und den Zeichnungen dienen lediglich dem besseren Verständnis der Erfindung und sollen den Schutzumfang nicht einschränken.

### Bezugszeichenliste

Es bezeichnen:
- 2: Süßwarenhohlkörper
- 4: Überraschungsartikel
- 6: Süßwarenkörper-Halbschale von 2
- 6.2: Äußere Halbschalenschicht von 6
- 6.4: Innere Halbschalenschicht von 6
- 8: Süßwarenkörper-Halbschale von 2
- 8.2: Äußere Halbschalenschicht von 8
- 8.4: Innere Halbschalenschicht von 8
- 10: Untere Formhälfte von 20
- 12: Obere Formhälfte von 20
- 14: Markierungsmittel
- 16: Randabschnitt von 10, 12
- 18: Formhälften-Trennebene(n)
- 20: Hohler Formkörper / schalenartige Außenverpackung von 2
- 22: Saturnringartiger Rand von 10, 12
- 24: Süßwarenkörper-Halbschalenrand von 6
- 26: Süßwarenkörper-Halbschalenrand von 8
- 28: Verschweißung / Versiegelung
- 30: Zungenartiger Randabschnitt / Trennlasche
- 32: Halbschalenförmige Vertiefungen in 34, 36 für 10, 12
- 34: Unterer Formhälftensatz
- 36: Oberer Formhälftensatz
- 38: Durchlaufrichtung
- 40: Stützform(en)
- 42: Süßwarenmasse
- 44: Stempel
- 46: Außenkontur von 44
- 48: Hauptabschnitt von 44
- 50: Innenkontur von 10, 12
- 52: Stempelformfläche von 44
- 54: Außenkontur von 44
- 56: Innenkontur von 6.4, 8.4
- 58: Innenkontur von 6.2, 8.2
- 60: Klapprichtung

## Patentansprüche

1. Verfahren zur Herstellung eines Süßwarenhohlkörpers (2) aus einer temperierten gießfähigen Süßwarenmasse (42), insbesondere einer Schokoladenmasse, umfassend folgende Schritte:
a) getrenntes Bereitstellen (S1 - S7) von mindestens zwei miteinander korrespondierenden dünnwandigen Formhälften (10, 12), die jeweils über einen gleichartig ausgebildeten oberen flächigen Randabschnitt (16, 22) verfügen, der eine Formhälften-Trennebene (18) definiert, wobei diese Formhälften (10, 12) zugleich eine spätere Außenverpackung (20) des Süßwarenhohlkörpers (2) darstellen,
b) Einfüllen (S9; S13) der Süßwarenmasse (42) in die jeweiligen Formhälften (10, 12),
c) Einführen (S10; S14) eines Stempels (44) in die jeweilige Formhälfte (10, 12) und die darin eingefüllte temperierte Süßwarenmasse (42), um jeweils eine Süßwarenkörper-Halbschale (6, 8) mit einer gewünschten Wandstärke zu formen, und um die jeweilige derart geformte Süßwarenkörper-Halbschale (6, 8) zwischen dem Stempel (44) und der Formhälfte (10, 12) erstarren zu lassen,
d) Entfernen (S11; S15) des Stempels (44),
e) Zusammenfügen (S18 - S20; 28, 60) der miteinander korrespondierenden dünnwandigen Formhälften (10, 12) mit den darin angeordneten erstarrten Süßwarenkörper-Halbschalen (6, 8) an ihren Formhälften-Trennebenen (18), so daß die Randabschnitte (16, 22) an den Formhälften-Trennebenen (18) aufeinanderliegen, um einen geschlossenen hohlen Formkörper (20) mit einem darin befindlichen, aus den Süßwarenkörper-Halbschalen (6, 8) zusammengesetzten Süßwarenhohlkörper (2) zu bilden, wobei der hohle Formkörper (20) eine lösbare schalenartige Außenverpackung des Süßwarenhohlkörpers (2) bildet und
f) Beschneiden (S20) des fertigen geschlossenen hohlen Formkörpers (20) an den flächigen Randabschnitten (16) seiner an ihren Formhälften-Trennebenen (18) aufeinanderliegenden Formhälften (10, 12) auf ein endgültiges Verpackungsformat für einen einzelnen Süßwarenhohlkörper (2), so daß ein sich vollständig um den Formkörper (20) herum erstreckender saturnringartiger Rand (22) entsteht.

2. Verfahren nach Anspruch 1,
**dadurch gekennzeichnet, daß**
vor dem Schritt e) zumindest eine der Süßwarenkörper-Halbschalen (6, 8) an ihrem Süßwarenkörper-Halbschalenrand (24, 26), der mit einem Süßwarenkörper-Halbschalenrand (24, 26) der mindestens einen anderen korrespondierenden Süßwarenkörper-Halbschale (6, 8) zusammenpaßt, erwärmt wird, so daß sich die Süßwarenkörper-Halbschalen (6, 8) beim Zusammenfügen (S18 - S20) der dünnwandigen Formhälften (10, 12) im Schritt e) an ihren Süßwarenkörper-Halbschalenrändern (24, 26) zu einem geschlossenen Süßwarenhohlkörper (2) verbinden.

3. Verfahren nach Anspruch 1 oder 2,
**dadurch gekennzeichnet, daß**
nach dem Schritt d) die Schritte b) bis d) mindestens einmal wiederholt werden (S13 - S15), um mindestens eine weitere Schalenschicht (6.4, 8.4) einer Süßwarenmasse (42) in der bereits zuvor erstarrten Süßwarenkörper-Halbschale (6.2, 8.2) zu bilden.

4. Verfahren nach einem oder mehreren der vorhergenannten Ansprüche,
**dadurch gekennzeichnet, daß**
die temperierte Süßwarenmasse (42) im Schritt c) gekühlt (44) wird.

5. Verfahren nach einem oder mehreren der vorhergenannten Ansprüche,
**dadurch gekennzeichnet, daß**
nach dem Schritt d) die in ihren Formhälften (10, 12) befindlichen Süßwarenkörper-Halbschalen (6, 8) weiter gekühlt (S12; S16) werden.

6. Verfahren nach einem oder mehreren der vorhergenannten Ansprüche,
**dadurch gekennzeichnet, daß**
vor dem Schritt a) die dünnwandigen Formhälften (10, 12) mit ihren die Formhälften-Trennebene (18) bildenden Randabschnitten (16, 22) jeweils aus einem dünnen, platten- oder folienförmigen, lebensmittelechten Kunststoffmaterial tiefgezogen (S2, S3) werden.

7. Verfahren nach Anspruch 6,
**dadurch gekennzeichnet, daß**
beim Tiefziehen (S2, S3) mehrere gleichartige, nebeneinander- und/oder hintereinanderliegende Formhälften (10, 12) geformt werden, die einen zusammenhängenden Formhälftensatz (34, 36) bilden.

8. Verfahren nach einem oder mehreren der vorhergenannten Ansprüche,
**dadurch gekennzeichnet, daß**
die dünnwandigen Formhälften (10, 12) vor dem Schritt a) an ihrer dem Süßwarenhohlkörper (2) abgewandten Außenseite mit einem Markierungsmittel (14) versehen werden (S4).

9. Verfahren nach einem oder mehreren der vorhergenannten Ansprüche,
**dadurch gekennzeichnet, daß**
in mindestens einem der Schritte a) bis e) die Formhälften (10, 12) an ihren Außenseiten durch eine zu den Formhälften (10, 12) komplementär ausgebildete Stützform (40) gestützt werden (S8 - S19).

10. Verfahren nach einem oder mehreren der vorhergenannten Ansprüche,
**dadurch gekennzeichnet, daß**
unmittelbar vor dem Schritt e) die miteinander korrespondierenden Formhälften (10, 12) zur Bildung eines vollständigen hohlen Formkörpers (20) aufeinandergeklappt (S18; 60) werden.

11. Verfahren nach einem oder mehreren der vorhergenannten Ansprüche,
**dadurch gekennzeichnet, daß**
beim Zusammenfügen (S20; 28) der Formhälften (10, 12) im Schritt e) mindestens ein Randabschnittsbereich (30) der Randabschnitte (16, 22) ausgespart wird, so daß die Randabschnitte (16, 22) in der Formhälften-Trennebene (18) an dieser Stelle (30) lose aufeinanderliegen.

12. Verfahren nach einem oder mehreren der vorhergenannten Ansprüche,
**dadurch gekennzeichnet, daß**
die Formhälften (10, 12) beim Zusammenfügen (S20; 28) im Schritt e) an ihren Randabschnitten (16, 22) versiegelt (S20; 28) werden.

13. Verfahren nach einem oder mehreren der vorhergenannten Ansprüche,
**dadurch gekennzeichnet, daß**
die tiefgezogenen und/oder mit einem Markierungsmittel (14) versehenen Formhälften (10, 12) und/oder Formhälftensätze (34, 36) vor dem Schritt a) auf ein Satzformat beschnitten (S5) werden.

14. Verfahren nach einem oder mehreren der vorhergenannten Ansprüche,
**dadurch gekennzeichnet, daß**
beim Beschneiden (S20) eine Trennlasche (30) an demjenigen Abschnitt (30) des saturnringartigen Rands (22) gebildet wird, an dem die Randabschnitte (16, 22) in der Formhälften-Trennebene (18) lose aufeinanderliegen.

15. Verfahren nach einem oder mehreren der vorhergenannten Ansprüche,
**dadurch gekennzeichnet, daß**
wenigstens zwei der folgenden Schritte im wesentlichen gleichzeitig ausgeführt werden:
- Zusammenfügen (S20; 28) der miteinander korrespondierenden dünnwandigen Formhälften (10, 12),
- Beschneiden (S20) der aufeinanderliegenden Formhälften (10, 12) auf ein endgültiges Verpackungsformat,
- Versiegeln (S20; 28) der Formhälften (10, 12) an ihren Randabschnitten (16, 22).

16. Verfahren nach einem oder mehreren der vorhergenannten Ansprüche,
**dadurch gekennzeichnet, daß**
- im Schritt c) ein Stempel (44) verwendet wird, der eine Stempelformfläche (52) aufweist, die bei Erreichen einer zur Bildung der gewünschten Wandstärke der zu formenden Süßwarenkörper-Halbschale (6, 8) erforderlichen Stempelposition die Formhälften (10, 12) an ihrer Trennebene (18) im wesentlichen bündig verschließt und einen geometrisch präzisen Süßwarenkörper-Halbschalenrand (24, 26) definiert,
und
- im vorangehenden Schritt b) in die jeweilige Formhälfte (10, 12) eine dosierte Süßwarenmasse-Volumenmenge eingefüllt wird (S9, S13),
- deren Volumen im wesentlichen dem Volumen eines Hohlraumes entspricht, der zwischen der Innenkontur (50) der Formhälfte (10, 12), der Außenkontur (46) des in die Formhälfte (10, 12) eingeführten Stempels (44) und der die Trennebene (18) bündig verschließenden Stempelformfläche (52) abgegrenzt ist,
oder
- deren Volumen im wesentlichen dem Volumen eines Hohlraumes entspricht, der zwischen der Innenkontur (58) einer in einem vorangegangenen Schritt geformten Süßwarenkörper-Halbschale (6, 8; 6.2, 8.2), der Außenkontur (54) des in die Formhälfte (10, 12) eingeführten Stempels (44) und der die Trennebene (18) bündig verschließenden Stempelformfläche (52) abgegrenzt ist,
so daß eine Süßwarenkörper-Halbschale (6, 8) mit einem exakt begrenzten Süßwarenkörper-Halbschalenrand (24, 26) geformt wird, der mit einem gleichartigen Süßwarenkörper-Halbschalenrand (24, 26) einer korrespondierenden Süßwarenkörper-Halbschale (6, 8) genau zusammenpaßt.

17. Verfahren nach einem oder mehreren der vorhergenannten Ansprüche,
**dadurch gekennzeichnet, daß**
vor dem Schritt e) wenigstens ein Überraschungsartikel (4) in mindestens eine (6) der bereits erstarrten Süßwarenkörper-Halbschalen (6, 8) eingefüllt wird (S17).

18. Verpackter Süßwarenhohlkörper (2) aus einer Süßwarenmasse (42), insbesondere einer Schokoladenmasse oder einer schokoladenartigen Masse, umfassend
- mindestens zwei zusammengesetzte, den Süßwarenhohlkörper (2) bildende Süßwarenkörper-Halbschalen (6, 8), die jeweils lösbar in eine von mindestens zwei dünnwandigen, gleichartigen, miteinander korrespondierenden Formhälften (10, 12) eingeformt sind,
- wobei die Formhälften (10, 12) jeweils über einen gleichartig ausgebildeten oberen flächigen und sich vollständig um den Formkörper (20) herum erstreckenden saturnringartigen Rand (22) bildenden Randabschnitt (16, 22) verfügen, der eine Formhälften-Trennebene (18) definiert, an der die Formhälften (10, 12) mit ihren jeweiligen Randabschnitten (16, 22) aufeinanderliegend zu einem geschlossenen hohlen Formkörper (20) zusammengefügt sind, der den aus den Süßwarenkörper-Halbschalen (6, 8) gebildeten Süßwarenhohlkörper (2) vollständig als lösbare schalenartige Außenverpackung umgibt.

19. Verpackter Süßwarenhohlkörper nach Anspruch 18,
**dadurch gekennzeichnet, daß**
die Süßwarenkörper-Halbschalen (6, 8) jeweils einen geometrisch präzise geformten Süßwarenkörper-Halbschalenrand (24, 26) besitzen, der mit einem gleichartigen Süßwarenkörper-Halbschalenrand (24, 26) einer korrespondierenden Süßwarenkörper-Halbschale (6, 8) genau zusammenpaßt.

20. Verpackter Süßwarenhohlkörper nach Anspruch 18 oder 19,
**dadurch gekennzeichnet, daß**
die Süßwarenkörper-Halbschalen (6, 8) an ihren Süßwarenkörper-Halbschalenrändern (24, 26) lose aufeinanderliegen.

21. Verpackter Süßwarenhohlkörper nach einem oder mehreren der Ansprüche 18 bis 20,
**dadurch gekennzeichnet, daß**
die Süßwarenkörper-Halbschalen (6, 8) an ihren Süßwarenkörper-Halbschalenrändern (24, 26) zu einem geschlossenen Süßwarenhohlkörper (2) verbunden sind.

22. Verpackter Süßwarenhohlkörper nach einem oder mehreren der Ansprüche 18 bis 21,
**dadurch gekennzeichnet, daß**
die Formhälften (10, 12) aus einem lebensmittelechten Kunststoffmaterial tiefgezogen (S3) sind.

23. Verpackter Süßwarenhohlkörper nach einem oder mehreren der Ansprüche 18 bis 22,
**dadurch gekennzeichnet, daß**
die Formhälften (10, 12) an ihrer Außenseite mit einem Markierungsmittel (14) versehen sind.

24. Verpackter Süßwarenhohlkörper nach einem oder mehreren der Ansprüche 18 bis 23,
**dadurch gekennzeichnet, daß**
die zusammengefügten Formhälften (10, 12) an ihren Randabschnitten (16, 22) mindestens einen Randabschnittsbereich (30) aufweisen, an dem die Randabschnitte (16, 22) in der Formhälften-Trennebene (18) lose aufeinanderliegen.

25. Verpackter Süßwarenhohlkörper nach einem oder mehreren der Ansprüche 18 bis 24,
**dadurch gekennzeichnet, daß**
die Formhälften (10, 12) an ihren Randabschnitten (16, 22) versiegelt (28) sind.

26. Verpackter Süßwarenhohlkörper nach einem oder mehreren der Ansprüche 18 bis 25,
**dadurch gekennzeichnet, daß**
der saturnringartige Rand (22) im Bereich des losen Randabschnittbereichs (30) eine Trennlasche (30) besitzt, mit der die zusammengefügten (28) Formhälften (10, 12) wieder zu lösen sind.

27. Verpackter Süßwarenhohlkörper nach einem oder mehreren der Ansprüche 18 bis 26,
**dadurch gekennzeichnet, daß**
die Süßwarenkörper-Halbschalen (6, 8) mehrschichtig (6.2, 8.2; 6.4, 8.4) aufgebaut sind.

28. Verpackter Süßwarenhohlkörper nach einem oder mehreren der Ansprüche 18 bis 26,
**dadurch gekennzeichnet, daß**
in seinem Inneren mindestens ein Überraschungsartikel (4) angeordnet ist.

## Claims

1. Method for the manufacture of a hollow confectionery body (2) from a pourable confectionery composition (42) of controlled temperature, in particular a chocolate composition, including the following steps:
a) separate provision (S1 - S7) of at least two thin-walled mould halves (10, 12) matching each other, which each have an upper planar edge section (16, 22) of identical construction defining a dividing plane (18) of the mould halves, wherein these mould halves (10, 12) also form a subsequent outer package (20) of the hollow confectionery body (2),
b) pouring (S9; S13) the confectionery composition (42) into the respective mould halves (10, 12),
c) introduction (S10; S14) of a plunger (44) into the respective mould half (10, 12) and the controlled-temperature confectionery composition (42) poured into it, to form in each case a confectionery body half-shell (6, 8) with a desired wall thickness, and to let the respective confectionery body half-shell (6, 8) formed in this way solidify between the plunger (44) and the mould half (10, 12),
d) removal (S11; S15) of the plunger (44),
e) joining together (S18 - S20; 28, 60) the thin-walled mould halves (10, 12) matching each other with the solidified confectionery body half-shells (6, 8) arranged therein, at their dividing planes (18) of the mould halves, so that the edge sections (16, 22) rest on one another at the dividing planes (18) of the mould halves, to form a closed hollow mould body (20) with a hollow confectionery body (2) located therein and assembled from the confectionery body half-shells (6, 8), wherein the hollow mould body (20) forms a releasable shell-like outer package of the hollow confectionery body (2), and
f) trimming (S20) the finished closed hollow mould body (20) at the planar edge sections (16) of its mould halves (10, 12), which rest on one another at their dividing planes (18) of the mould halves, to a final package size for a single hollow confectionery body (2), so that a Saturn ring-like edge (22) extending completely round the mould body (20) is formed.

2. Method according to claim 1, **characterised in that** before step e) at least one of the confectionery body half-shells (6, 8) is heated at its confectionery body half-shell edge (24, 26), which fits together with a confectionery body half-shell edge (24, 26) of the at least one other matching confectionery body half-shell (6, 8), so that the confectionery body half-shells (6, 8) are joined to form a closed hollow confectionery body (2) when the thin-walled mould halves (10, 12) are joined together (S18 - S20) in step e) at their confectionery body half-shell edges (24, 26).

3. Method according to claim 1 or 2, **characterised in that** after step d) steps b) to d) are repeated at least once (S13 - S15), to form at least one further shell layer (6.4, 8.4) of a confectionery composition (42) in the already presolidified confectionery body half-shell (6.2, 8.2).

4. Method according to one or more of the above-mentioned claims, **characterised in that** the controlled-temperature confectionery composition (42) is cooled (44) in step c).

5. Method according to one or more of the above-mentioned claims, **characterised in that** after step d) the confectionery body half-shells (6, 8) located in their mould halves (10, 12) are further cooled (S12; S16).

6. Method according to one or more of the above-mentioned claims, **characterised in that** before step a) the thin-walled mould halves (10, 12) with their edge sections (16, 22) forming the dividing plane (18) of the mould halves are in each case deep-drawn (S2, S3) from a thin, plate- or film-like food-resistant synthetic material.

7. Method according to claim 6, **characterised in that** during deep-drawing (S2, S3) several identical mould halves (10, 12) located one beside and/or behind the other are shaped, forming a coherent set of mould halves (34, 36).

8. Method according to one or more of the above-mentioned claims, **characterised in that** before step a) the thin-walled mould halves (10, 12) are provided with a marking means (14) on their outer side facing away from the hollow confectionery body (2).

9. Method according to one or more of the above-mentioned claims, **characterised in that** in at least one of steps a) to e) the mould halves (10, 12) are supported (S8 - S19) on their outer sides by a supporting mould (40) of complementary shape to the mould halves (10, 12).

10. Method according to one or more of the above-mentioned claims, **characterised in that** immediately before step e) the mould halves (10, 12) matching each other are folded onto one another (S18; 60) to form a complete hollow mould body (20).

11. Method according to one or more of the above-mentioned claims, **characterised in that**, when joining together (S20; 28) the mould halves (10, 12) in step e), at least one edge section region (30) of the edge sections (16, 22) is hollowed out, so that the edge sections (16, 22) rest loosely on one another at this point (30) in the dividing plane (18) of the mould halves.

12. Method according to one or more of the above-mentioned claims, **characterised in that** the mould halves (10, 12) are sealed (S20; 28) at their edge sections (16, 22) when joined together (S20; 28) in step e).

13. Method according to one or more of the above-mentioned claims, **characterised in that** the mould halves (10, 12) and/or sets of mould halves (34, 36) which have been deep-drawn and/or provided with a marking means (14) are trimmed (S5) to a set size before step a).

14. Method according to one or more of the above-mentioned claims, **characterised in that** during trimming (S20) a separating tab (30) is formed on the section (30) of the Saturn ring-like edge (22) at which the edge sections (16, 22) rest loosely on one another in the dividing plane (18) of the mould halves.

15. Method according to one or more of the above-mentioned claims, **characterised in that** at least two of the following steps are performed essentially simultaneously:
- joining together (S20; 28) the thin-walled mould halves (10, 12) matching each other,
- trimming (S20) the mould halves (10, 12) resting on one another to a final package size,
- sealing (S20; 28) the mould halves (10, 12) at their edge sections (16, 22).

16. Method according to one or more of the above-mentioned claims, **characterised in that**
- in step c) a plunger (44) is used, comprising a plunger mould surface (52) which, on reaching a plunger position required for forming the desired wall thickness of the confectionery body half-shell (6, 8) to be shaped, closes the mould halves (10, 12) essentially level at their dividing plane (18) and defines a geometrically precise confectionery body half-shell edge (24, 26),
and
- in the preceding step b) into the respective mould half (10, 12) is poured (S9, S13) a measured volumetric quantity of confectionery composition
- whose volume essentially corresponds to the volume of a cavity which is defined between the inner contour (50) of the mould half (10, 12), the outer contour (46) of the plunger (44) introduced into the mould half (10, 12), and the plunger mould surface (52) which closes the dividing plane (18) level,
or
- whose volume essentially corresponds to the volume of a cavity which is defined between the inner contour (58) of a confectionery body half-shell (6, 8; 6.2, 8.2) moulded in a previous step, the outer contour (54) of the plunger (44) introduced into the mould half (10, 12), and the plunger mould surface (52) which closes the dividing plane (18) level,
so that a confectionery body half-shell (6, 8) with an exactly defined confectionery body half-shell edge (24, 26) is formed, which fits together precisely with an identical confectionery body half-shell edge (24, 26) of a matching confectionery body half- shell (6, 8).

17. Method according to one or more of the above-mentioned claims, **characterised in that** before step e) at least one surprise article (4) is introduced (S17) into at least one (6) of the already solidified confectionery body half-shells (6, 8).

18. Packaged hollow confectionery body (2) consisting of a confectionery composition (42), in particular a chocolate composition or a chocolate-like composition, including
- at least two confectionery body half-shells (6, 8) assembled and forming the hollow confectionery body (2), which are in each case releasably moulded in one of at least two thin-walled, identical mould halves (10, 12) matching each other,
- wherein the mould halves (10, 12) each have an upper planar edge section (16, 22) of identical construction which forms a Saturn ring-like edge (22) extending completely round the mould body (20) and which defines a dividing plane (18) of the mould halves at which the mould halves (10, 12) with their respective edge sections (16, 22) resting on one another are joined together to form a closed hollow mould body (20) which completely surrounds the hollow confectionery body (2) formed from the confectionery body half-shells (6, 8), as a releasable shell-like outer package.

19. Packaged hollow confectionery body according to claim 18, **characterised in that** the confectionery body half-shells (6, 8) each have a geometrically precisely shaped confectionery body half-shell edge (24, 26) which fits together precisely with an identical confectionery body half-shell edge (24, 26) of a matching confectionery body half-shell (6, 8).

20. Packaged hollow confectionery body according to claim 18 or 19, **characterised in that** the confectionery body half-shells (6, 8) rest loosely on one another at their confectionery body half-shell edges (24, 26).

21. Packaged hollow confectionery body according to one or more of claims 18 to 20, **characterised in that** the confectionery body half-shells (6, 8) are joined at their confectionery body half-shell edges (24, 26) to form a closed hollow confectionery body (2).

22. Packaged hollow confectionery body according to one or more of claims 18 to 21, **characterised in that** the mould halves (10, 12) are deep-drawn (S3) from a food-resistant synthetic material.

23. Packaged hollow confectionery body according to one or more of claims 18 to 22, **characterised in that** the mould halves (10, 12) are provided on their outer side with a marking means (14).

24. Packaged hollow confectionery body according to one or more of claims 18 to 23, **characterised in that** the joined-together mould halves (10, 12) at their edge sections (16, 22) comprise at least one edge section region (30) at which the edge sections (16, 22) rest loosely on one another in the dividing plane (18) of the mould halves.

25. Packaged hollow confectionery body according to one or more of claims 18 to 24, **characterised in that** the mould halves (10, 12) are sealed (28) at their edge sections (16, 22) .

26. Packaged hollow confectionery body according to one or more of claims 18 to 25, **characterised in that** the Saturn ring-like edge (22) in the region of the loose edge section region (30) has a separating tab (30) with which the joined-together (28) mould halves (10, 12) are to be released again.

27. Packaged hollow confectionery body according to one or more of claims 18 to 26, **characterised in that** the confectionery body half-shells (6, 8) are constructed in several layers (6.2, 8.2; 6.4, 8.4).

28. Packaged hollow confectionery body according to one or more of claims 18 to 26, **characterised in that** in its interior is arranged at least one surprise article (4).

## Revendications

1. Procédé de fabrication d'un produit de confiserie creux (2) à partir d'une masse de confiserie (42) tempérée coulable, en particulier d'une masse de chocolat, comportant les étapes suivantes :
a) mise à disposition séparée (S1 - S7) d'au moins deux moitiés (10-12) de moule à paroi mince allant ensemble, qui disposent d'une bordure (16, 22) supérieure étendue de même forme laquelle définit un plan de séparation (18) des moitiés de moule, ces moitiés de moule (10, 12) représentant un futur emballage externe (20) du produit de confiserie creux (2),
b) Versement (S9 ; S13) de la masse de confiserie (42) dans les moitiés de moule (10, 12),
c) Introduction (S10 ; S14) d'un poinçon (44) dans la moitié de moule concernée (10, 12) et la masse de confiserie (42) tempérée versée dedans pour former une demi-coque (6, 8) de confiserie d'une épaisseur souhaitée et faire solidifier la demi-coque de confiserie ainsi formée (6, 8) entre le poinçon (44) et la moitié de moule (10, 12),
d) Retrait (S11 ; S15) du poinçon (44),
e) Assemblage (S18 - S20 ; 28, 60) des moitiés de moule (10, 12) à paroi mince allant ensemble (10, 12) avec les demi-coques de confiserie (6, 8) solidifiées sur leurs plans de séparation (18), de sorte que les bordures (16, 22) soient l'une sur l'autre sur les plans de séparation des moitiés de moule afin de former un corps moulé creux fermé (20) avec, à l'intérieur, un produit de confiserie creux (2) constitué des demi-coques de confiserie (6, 8), le corps moulé creux (20) formant un emballage extérieur détachable en forme de coque du produit de confiserie creux (2) et
f) Ebarbage (S20) du corps moulé (20) creux fermé terminé sur les bordures étendues (16) de ses moitiés de moule (10, 12) superposées sur leurs niveaux de séparation (18) à un format d'emballage définitif d'un produit de confiserie creux (2) de manière à obtenir un rebord (22) en forme d'anneau de saturne entourant entièrement le corps moulé (20).

2. Procédé selon revendication 1,
**caractérisé en ce que**
avant l'étape e), on chauffe au moins une des demi-coques de confiserie (6, 8) sur son rebord (24, 26) qui cadre au moins avec un rebord (24, 26) de l'autre demi-coque de confiserie (6, 8) correspondante, de sorte que les demi-coques de confiserie (6, 8) s'aboutent lors de l'assemblage (S18 - S20) des moitiés de moule à paroi mince (10, 12) au cours de l'étape e) sur leurs rebords (24, 26) en formant un produit de confiserie creux fermé (2).

3. Procédé selon l'une quelconque des revendications 1 ou 2,
**caractérisé en ce que**
après l'étape d), on répète au moins une fois (S13 - S15) les étapes b) à d) afin de former au moins un couche de coque (6.4, 8.4) supplémentaire de masse de confiserie (42) dans la demi-coque de confiserie déjà solidifiée (6.2, 8.2).

4. Procédé selon une ou plusieurs des revendications précédentes,
**caractérisé en ce que**
la masse de confiserie tempérée (42) est refroidie (44) à l'étape c).

5. Procédé selon une ou plusieurs des revendications précédentes,
**caractérisé en ce que**
après l'étape d), on continue à refroidir (S12 ; S16) les demi-coques (6, 8) de confiserie se trouvant dans leurs moitiés de moule (10, 12).

6. Procédé selon une ou plusieurs des revendications précédentes,
**caractérisé en ce que**
avant l'étape a) on emboutit les moitiés de moule à paroi mince (10, 12) avec leurs bordures (16, 22) formant le plan de séparation (18) des moitiés de moule, à partir d'une matière synthétique pour contact alimentaire mince, en forme de plaque ou de film.

7. Procédé selon revendication 6,
**caractérisé en ce que**,
lors de l'emboutissage (S2, S3) on forme plusieurs moitiés de moule (10, 12) similaires, situées l'une à côté et/ou l'une derrière l'autre, qui forment un jeu de moitiés de moule (34, 36) communicantes.

8. Procédé selon une ou plusieurs des revendications précédentes,
**caractérisé en ce que**
l'on dote, les moitiés de moule (10, 12) à paroi mince, avant l'étape a), d'un agent de marquage (14) sur leur côté extérieur opposé au produit de confiserie creux (2).

9. Procédé selon une ou plusieurs des revendications précédentes,
**caractérisé en ce que**
au cours d'au moins une des étapes a) à e), les moitiés de moule (10, 12) sont soutenues (S8 - S19), sur leurs côtés extérieurs, par un appui (40) complémentaire aux moitiés de moule (10, 12).

10. Procédé selon une ou plusieurs des revendications précédentes,
**caractérisé en ce que**
directement avant l'étape e), on rabat (S18 ; 60) l'une sur l'autre les moitiés de moule (10, 12) correspondantes afin de former un corps moulé creux (20) complet.

11. Procédé selon une ou plusieurs des revendications précédentes,
**caractérisé en ce que**
lors de l'assemblage (S20 ; 28) des moitiés de moule (10, 12) on évide, à l'étape e), au moins une zone de bordure (30) des bordures (16, 22) de sorte que les bordures (16, 22) se superposent à cet endroit (30) de façon lâche sur le niveau de séparation (18) de moitiés de moule.

12. Procédé selon une ou plusieurs des revendications précédentes,
**caractérisé en ce que**
les moitiés de moule (10, 12) sont scellées (S20 ; 28) sur leurs bordures (16, 22) lors de l'assemblage (S20 ; 28) à l'étape e).

13. Procédé selon une ou plusieurs des revendications précédentes,
**caractérisé en ce que**
les moitiés de moule (10, 12) et/ou jeux de moitiés de moule (34, 36) emboutis et/ou dotés d'un agent de marquage (14) sont découpés (S15), avant l'étape a), à un format de jeu.

14. Procédé selon une ou plusieurs des revendications précédentes,
**caractérisé en ce que**
lors de l'ébarbage (S20), un couteau de sectionnement (30) est formé sur la section (30) du bord (22) en forme d'anneau de saturne sur lequel les bordures (16, 22) se superposent de façon lâche sur le plan de séparation (18) des moitiés de moule.

15. Procédé selon une ou plusieurs des revendications précédentes,
**caractérisé en ce que**
on réalise, essentiellement en même temps, au moins deux des étapes suivantes :
- Assemblage (S20 ; 28) des moitiés de moule (10, 12) à paroi mince allant ensemble,
- Ebarbage (S20) des moitiés de moule (10, 12) superposées à un format d'emballage définitif,
- Scellement (S20 ; 28) des moitiés de moule (10, 12) sur leurs bordures (16, 22).

16. Procédé selon une ou plusieurs des revendications précédentes,
**caractérisé en ce que**
- à l'étape c) on utilise un poinçon (44) qui présente une face de poinçonnage (52) laquelle, lorsque la position de poinçonnage nécessaire à la formation de l'épaisseur de paroi souhaitée de la demi-coque de confiserie (6, 8) à mouler est atteinte, ferme de façon essentiellement affleurante les moitiés de moule (10, 12) sur leur plan de séparation (18) et définit un rebord de demi-coque de confiserie (24, 26) géométriquement précis,
et
- à l'étape b) précédente, on verse dans la moitié de moule concernée (10, 12) une dose de masse de confiserie (S9, S13)
- dont le volume correspond essentiellement au volume de l'espace qui est délimité entre le contour interne (50) de la moitié de moule (10, 12), le contour extérieur (46) du poinçon (44) introduit dans la moitié de moule (10, 12) et la face de poinçonnage (52) ferme de façon affleurante plan de séparation (18),
ou
- dont le volume correspond essentiellement au volume de l'espace délimité entre le contour intérieur (58) d'une demi-coque de confiserie (6,8 ; 6.2, 8.2) formée dans une étape précédente, le contour extérieur (54) du poinçon (44) introduit dans la moitié de moule (10, 12) et la face de poinçonnage (52) fermant de façon affleurante le plan de séparation (18),
de manière à former une demi-coque de confiserie (6, 8) avec un rebord (24, 26) aux limites exactes qui correspond précisément à un rebord de demi-coque de confiserie (24, 26) de même type d'une demi-coque de confiserie (6, 8) correspondante.

17. Procédé selon une ou plusieurs des revendications précédentes,
**caractérisé en ce que**
avant l'étape e) on place (S17) au moins une surprise (4) dans au moins une (6) des demi-coques de confiserie (6, 8) déjà solidifiées.

18. Produit de confiserie creux (2) emballé à partir d'une masse de confiserie (42), en particulier d'une masse de chocolat ou d'une masse de type chocolat, comportant
- au moins deux demi-coques (6, 8) de confiserie assemblées formant le produit de confiserie creux (2), lesquelles sont moulées dans l'une d'au moins deux moitiés de moule (10, 12) à paroi mince, de même type et correspondant l'une à l'autre,
- les moitiés de moule (10, 12) disposant chacune d'une bordure (16, 22) formant un rebord (22) supérieur étendu en forme d'anneau de saturne de même type et entourant entièrement le corps moulé (20), bordure qui définit un plan de séparation (18) des moitiés de moule sur lequel les moitiés de moule (10, 12) sont assemblées, l'une sur l'autre, avec leurs bordures respectives (16, 22) en un corps moulé (20) creux fermé qui entoure complètement le produit de confiserie creux (2) formé des demi-coques de confiserie (6, 8) en tant qu'emballage extérieur en forme de coque détachable.

19. Produit de confiserie creux emballé selon revendication 18,
**caractérisé en ce que**
les demi-coques de confiserie (6, 8) possèdent un rebord de demi-coques de confiserie (24, 26) aux formes géométriquement précises, qui correspond précisément à un rebord de demi-coques de confiserie (24, 26) de même type d'une demi-coque de confiserie (6, 8) correspondante.

20. Produit de confiserie creux emballé selon la revendication 18 ou 19,
**caractérisé en ce que**
les demi-coques de confiserie (6, 8) sont l'une sur l'autre de façon lâche sur leurs rebords (24, 26).

21. Produit de confiserie creux emballé selon une ou plusieurs des revendications 18 à 20,
**caractérisé en ce que**
les demi-coques de confiserie (6, 8) sont reliées, sur leurs rebords (24, 26) en un produit de confiserie creux (2) fermé.

22. Produit de confiserie creux emballé selon une ou plusieurs des revendications 18 à 21,
**caractérisé en ce que**
les moitiés de moule (10, 12) sont embouties (S3) à partir d'une matière synthétique pour contact alimentaire.

23. Produit de confiserie creux emballé selon une ou plusieurs des revendications 18 à 22,
**caractérisé en ce que**
les moitiés de moule (10, 12) sur leur côté extérieur sont pourvues d'un agent de marquage (14).

24. Produit de confiserie creux emballé selon une ou plusieurs des revendications 18 à 23,
**caractérisé en ce que**
les moitiés de moule assemblées (10, 12) présentent, sur leurs bordures (16, 22) au moins une zone de bordure (30) sur laquelle les bordures (16, 22) se superposent de façon lâche sur le plan de séparation (18) des moitiés de moule.

25. Produit de confiserie creux emballé selon une ou plusieurs des revendications 18 à 24,
**caractérisé en ce que**
les moitiés de moule (10, 12) sont scellés (28) sur leurs bordures (16, 22).

26. Produit de confiserie creux emballé selon une ou plusieurs des revendications 18 à 25,
**caractérisé en ce que**
le rebord en forme d'anneau de saturne (22) possède, au niveau de la zone de bordure (30) lâche, une languette de séparation (30) qui permet de redétacher les moitiés de moule (10, 12) assemblées (28).

27. Produit de confiserie creux emballé selon une ou plusieurs des revendications 18 à 26,
**caractérisé en ce que**
les demi-coques de confiserie (6, 8) comportent plusieurs couches (6.2, 8.2 ; 6.4, 8.4).

28. Produit de confiserie creux emballé selon une ou plusieurs des revendications 18 à 26,
**caractérisé en ce que**
à l'intérieur, il y a au moins une surprise (4).
